# EUROPEAN PATENT SPECIFICATION

(11) **EP 2 831 675 B1**
(45) Date of publication and mention of the grant of the patent: **08.11.2017**
(21) Application number: 13767630.0
(22) Date of filing: 14.03.2013
(51) Int. Cl.: G03G 9/087, B01J 2/02, C08J 3/12

(54) **METHOD FOR PRODUCING PARTICLES, TONER, DEVELOPER, AND IMAGE FORMING APPARATUS**
VERFAHREN ZUR HERSTELLUNG VON PARTIKELN, TONER, ENTWICKLER SOWIE BILDFORMUNGSVORRICHTUNG
PROCÉDÉ POUR PRODUIRE DES PARTICULES, TONER, RÉVÉLATEUR ET APPAREIL DE FORMATION D'IMAGE

(30) Priority: 26.03.2012 JP 2012069361
(43) Date of publication of application: 04.02.2015
(73) Proprietor: Ricoh Company, Ltd., Tokyo 143-8555 (JP)
(72) Inventor: OSAKA, Keiko, Tokyo 143-8555 (JP); TANAKA Chiaki, Tokyo 143-8555 (JP)
(74) Representative: Schwabe - Sandmair - Marx
(86) International application number: PCT/JP2013/058198
(87) International publication number: WO 2013/146558

(56) References cited:
- EP-A2- 1 521 127
- WO-A1-2007/028421
- WO-A1-2011/111861
- JP-A- 2002 515 324
- JP-A- 2005 258 394
- JP-A- 2011 526 836
- JP-B2- 4 113 452
- US-A- 6 056 791

## Description

### Technical Field

The present invention relates to a method for producing particles, a toner, and an image forming apparatus.

### Background Art

Conventionally, various products in the shape of particles are produced by processing resins depending on the properties thereof. For example, disclosed is a method for producing a toner as one example of particles, in which a composition including a resin and additive is melted and kneaded, followed by cooling, solidification, pulverization, and classification (see PTL 1). In the case where a toner is produced by the aforementioned method, however, fine powder generated by pulverization is mixed in the toner, and therefore basic properties of the toner, such as charging properties, fixing ability, and heat resistant storage stability, are impaired.

As for a method for producing a toner without pulverizing a resin or the like, disclosed is a method for emulsifying and dispersing a colorant resin solution (see PTL 2). In according to this method, a colorant resin solution containing a polyester-based resin, a colorant, and a water-insoluble organic solvent is emulsified and dispersed in water to form an O/W emulsion, followed by removing the organic solvent to color resin particles, which are then aggregated to produce toner particles. In the case where a toner is produced in this method, however, there is a problem that a large load is applied to the environment as the organic solvent is used.

As for a method for producing a toner without using an organic solvent, disclosed is a method using liquid carbon dioxide (see PTL 3). In accordance with this method, a resin melt of polyester and liquid carbon dioxide are mixed by a static mixer, and the obtain mixture is discharged from a nozzle provided at an edge of the static mixer into the atmosphere having the temperature of 20°C under the atmospheric pressure, to expand the mixture due to the reduction in the pressure, to thereby produce a toner.

PTL 4 discloses a method of manufacturing toner particularly having high energy efficiency and productivity by melting a kneaded material comprising toner structural materials conventionally used for the manufacture of toner by a pulverization system, then by producing fine particles by a spray granulation method. A supersonic gas like air is injected to the toner's kneaded composition or the toner's melted composition ejected from the kneaded-or-melted composition projecting die.

### Citation List

### Patent Literature

PTL 1: Japanese Patent (JP-B) No. 2677685
PTL 2: Japanese Patent Application Laid-Open (JP-A) No. 10-20552
PTL 3: JP-B No. 4113452
PTL 4: EP 1521127 A2

### Summary of Invention

### Technical Problem

In the case where a melt, which is a mixture obtained by mixing the resin melt and the liquid carbon dioxide, is jetted from a nozzle, the discharged melt is rapidly cooled. As a result, the melt is solidified in the fibrous or cohesive state before formed into particles, and therefore a yield of particles is low due to formation of fibrous products or the like.

The present invention aims to solve the aforementioned various problems in the art, and to achieve the following object. An object of the present invention is to provide a method for producing particles, which prevents the melt from being solidified in the state before being formed into particles, and improves a yield of particles.

### Solution to Problem

The means for solving the aforementioned problems are as follows:
A method for producing polyester resin particles, comprising: bringing a first compressive fluid and raw materials containing a pressure plastic material which is a polyester into contact with each other to melt the polyester; mixing the melt of the polyester resin obtained by contacting with the first compressive fluid and a second compressive fluid containing nitrogen; and jetting the melt of the polyester resin obtained by mixing with the second compressive fluid, to thereby form particles, wherein the pressure plastic material has the characteristics that the glass transition temperature (Tg) reduces as pressure is applied, wherein the first compressive fluid and the second compressive fluid are one of the following:
   i) a supercritical fluid,
   ii) a liquefied gas obtained by compressing a substance existing as a gas at a normal temperature of 25° C and a normal pressure of 1 atm, or
   iii) a high pressure gas whose pressure is ½ Pc or higher, wherein Pc is the pressure of the critical point; wherein the second compressive fluid is a substance having the maximum inversion temperature of 800K or lower, wherein the melt has a viscosity of 500mPa·s or lower, wherein the viscosity of 500mPa·s or lower is measured under the condition at the pressure of 30 MPa or lower.

### Advantageous Effects of Invention

As explained above, in the method for producing particles of the present invention, the melt is jetted with supplying the second compressive fluid containing nitrogen. Since the second compressive fluid contains nitrogen, decrease in temperature due to the Joule-Thomson effect, which is caused along with the change in the pressure as the melt is jetted, is suppressed. As a result, solidification of the jetted melt before formed into particles can be inhibited, and therefore a yield of particles can be improved.

The present invention can solve the aforementioned various problems in the art and can provide a method for producing particles, which prevents the melt from being solidified in the state before being formed into particles, and improves a yield of particles.

### Brief Description of Drawings

FIG. 1 is a graph illustrating a relation between glass transition temperature (vertical axis) of a pressure plastic material, and pressure (horizontal axis).
FIG. 2 is a general phase diagram showing the state of a substance varying depending on pressure and temperature conditions.
FIG. 3 is a phase diagram which defines a compressive fluid.
FIG. 4 is a schematic diagram illustrating one example of an apparatus for producing particles.
FIG. 5 is a schematic diagram illustrating one example of the image forming apparatus of the present invention.
FIG. 6 is a schematic diagram illustrating one example of an apparatus for producing particles.

### Description of Embodiments

### (Method for Producing Particles)

The method for producing particles of the present invention contains a melting step, and a particle-forming step, and may further contain other steps, if necessary.

### <Melting Step>

The melting step is bringing a first compressive fluid and raw materials containing a pressure plastic material into contact with each other to melt the pressure plastic material.

In the melting step, the pressure plastic material, which has been plasticized in advance by heating, is preferably brought into contact with the first compressive fluid.

### <Particle Forming Step>

The particle forming step is jetting a melt obtained by melting the pressure plastic material with supplying a second compressive fluid containing nitrogen to the melt.

In the melting step, the first compressive fluid and the pressure plastic material are preferably continuously brought into contact with each other without using a static mixer.

Moreover, a preferable embodiment of the method for producing particles is that the first compressive fluid and the pressure plastic material are continuously brought into contact with each other in the melting step, and the melt is continuously jetted to continuously form particles in the particle forming step.

Note that, in the present specification, the "melted" or "melting" means a state of raw materials, such as a pressure plastic material, that the taw materials are plasticized, and liquidized with swelling by bringing the raw materials into contact with the compressive fluid.

### -Raw Materials-

First, raw materials, such as a pressure plastic material, for use in the method for producing particles of the present invention will be explained. The raw materials are materials from which particles are produced, and mean materials that will be constitutional components of particles.

The raw materials contain at least a pressure plastic material, and may further contain other raw materials.

### --Pressure Plastic Material--

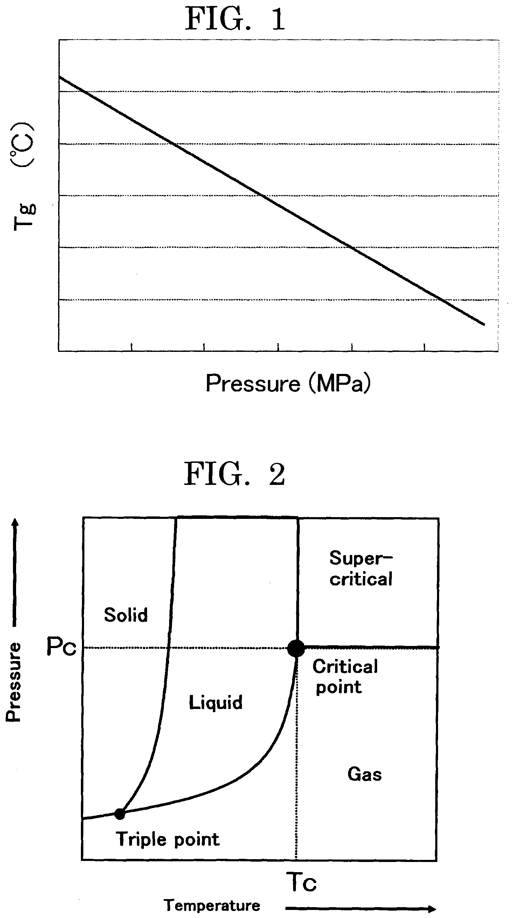

The pressure plastic material is explained hereinafter, with reference to FIG. 1. FIG. 1 is a graph depicting the relation between the glass transition temperature (vertical axis) of the pressure plastic material, and pressure (horizontal axis). In the present specification, the pressure plastic material is a material having a characteristic that the glass transition temperature (Tg) thereof reduces as pressure is applied. Specifically, the pressure plastic material is a material that is plasticized upon application of pressure without application of heat. For example, the pressure plastic material is plasticized at temperature lower than the glass transition temperature of the pressure plastic material as measured by atmospheric pressure, once pressure is applied to the pressure plastic material by bringing the pressure plastic material in contact with a compressive fluid.

FIG. 1 depicts the relation between grass transition temperature (vertical axis) of polystyrene, as an example of the pressure plastic material, and pressure (horizontal axis) in the presence of carbon dioxide. As illustrated in FIG. 1, there is a correlation between the glass transition temperature of the polystyrene and pressure, and the graph shows negative gradient. The material whose the gradient of the change in the grass transition temperature relative to pressure applied is negative, such as the case of polystyrene, is a pressure plastic material.

The gradient varies depending on the type, composition, and molecular weight of the pressure plastic material. For example, when the pressure plastic material is polystyrene, the gradient is -9 °C/MPa; when the pressure plastic material is a styrene-acryl resin, the gradient is -9 °C/MPa; when the pressure plastic material is a noncrystalline polyester resin, the gradient is -8 °C/MPa; when the pressure plastic material is crystalline polyester, the gradient is -2 °C/MPa; when the pressure plastic material is a polyol resin, the gradient is -8 °C/MPa; when the pressure plastic material is a urethane resin, the gradient is -7 °C/MPa; when the pressure plastic material is a polyarylate resin, the gradient is -11 °C/MPa; and when the pressure plastic resin is a polycarbonate resin, the gradient is -10 °C/MPa.

Note that, the gradient can be determined based in the following manner. Specifically, grass transition temperature of the pressure plastic material is measured by means of high pressure calorimeter C-80, manufactured by SETARAM Instrumentation with varying pressure applied, and the gradient is determined based on the results from the measurement. In the measurement above, a sample is set in a high pressure measuring cell, the cell is then purged with carbon dioxide, followed by applying pressure to give the predetermined pressure to measure glass transition temperature of the sample. Moreover, the gradient can be determined based on the variation of the glass transition temperature when the pressure is changed from atmospheric pressure (0.1 MPa) to 10 MPa.

The gradient of the change in the glass transition temperature of the pressure plastic material relative to the pressure applied to the pressure plastic material is appropriately selected depending on the intended purpose without any limitation, but it is preferably -1 °C/MPa or less, more preferably -5 °C/MPa or less, and even more preferably -10 °C/MPa or less. Note that, there is no lower limit for the gradient. When the gradient is greater than -1 °C/MPa, plasticization is sufficient with application of pressure without applying heat, which cannot make the melt low viscous, and therefore it may be difficult to form particles. Moreover, the viscosity of the pressure plastic material at the pressure of 30 MPa or lower is 500 mPa·s or lower, more preferably 20 mPa·s or lower. According to the present invention the viscosity of the pressure plastic material is adjusted to 500 mPa·s or lower at the pressure of 30 MPa or lower, by applying the heat having temperature equal to or lower than the melting point to the pressure plastic material under the atmospheric pressure. According to the present invention the pressure plastic material is a polyester resin in view that when the particles are toner particles, it is useful as a binder resin of the toner. These may be used alone, or in combination.

The polyester resin is appropriately selected depending on the intended purpose without any limitation, and examples thereof include modified polyester, unmodified polyester, non-crystalline polyester, and crystalline polyester.

### --Other Raw Materials--

In the method of the present invention, other than the aforementioned pressure plastic material, other raw materials may be used in combination depending on desired properties or processability of particles to be produced.

In the case where the particles to be produced by the method of the present invention are a toner, raw materials for toner (may be referred to as "toner raw materials" hereinafter) are used as the raw materials. In this case, other raw materials include, for example, a colorant, a surfactant, a dispersant, a releasing agent, a charge controlling agent, and crystalline polyester.

### ---Colorant---

The colorant is not particularly limited and may be appropriately selected from known dyes and pigments depending on the intended purpose. An amount of the colorant is appropriately selected depending on the intended coloring degree, but it is preferably 1 part by mass to 50 parts by mass, relative to 100 parts by mass of the pressure plastic material. The colorant may be used alone, or in combination.

Examples of the pigment include carbon blacks, nigrosine dyes, iron black, Naphthol Yellow S, Hansa Yellow (10G, 5G, G), cadmium yellow, yellow iron oxide, yellow ocher, chrome yellow, Titan Yellow, Polyazo Yellow, Oil Yellow, Hansa Yellow (GR, A, RN, R), Pigment Yellow L, Benzidine Yellow (G, GR), Permanent Yellow (NCG), Vulcan Fast Yellow (5G, R), Tartrazine Lake, Quinoline Yellow Lake, anthracene yellow BGL, isoindolinone yellow, colcothar, red lead oxide, lead red, cadmium red, cadmium mercury red, antimony red, Permanent Red 4R, Para Red, Fiser Red, parachloroorthonitroaniline red, Lithol Fast Scarlet G, Brilliant Fast Scarlet, Brilliant Carmine BS, Permanent Red (F2R, F4R, FRL, FRLL, F4RH), Fast Scarlet VD, Vulcan Fast Rubine B, Brilliant Scarlet G, Lithol Rubine GX, Permanent Red F5R, Brilliant Carmine 6B, Pigment Scarlet 3B, Bordeaux 5B, Toluidine Maroon, Permanent Bordeaux F2K, Helio bordeaux BL, bordeaux 10B, BON maroon light, BON maroon medium, eosin lake, rhodamine lake B, rhodamine lake Y, alizarin lake, thioindigo red B, thioindigo maroon, oil red, quinacridone red, pyrazolone red, polyazo red, chrome vermilion, benzidine orange, perinone orange, oil orange, cobalt blue, cerulean blue, alkali blue lake, peacock blue lake, victoria blue lake, metal-free phthalocyanine blue, phthalocyanine blue, fast sky blue, indanthrene blue (RS, BC), indigo, ultramarine blue, iron blue, anthraquinone blue, fast violet B, methylviolet lake, cobalt purple, manganese violet, dioxane violet, anthraquinone violet, chrome green, zinc green, chromium oxide, viridian green, emerald green, pigment green B, naphthol green B, green gold, acid green lake, malachite green lake, phthalocyanine green, anthraquinone green, titanium oxide, zinc flower, lithopone, and the like. These may be used alone or in combination.

Examples of the dye include C.I. SOLVENT YELLOW (6, 9, 17, 31, 35, 100, 102, 103, 105), C.I. SOLVENT ORANGE (2, 7, 13, 14, 66), C.I. SOLVENT RED (5, 16, 17, 18, 19, 22, 23, 143, 145, 146, 149, 150, 151, 157, 158), C.I. SOLVENT VIOLET (31, 32, 33, 37), C.I. SOLVENT BLUE (22, 63, 78, 83 to 86, 191, 194, 195, 104), C.I. SOLVENT GREEN (24, 25), and C. I. SOLVENT BROWN (3, 9). Moreover, examples of a commercial product of the dye include: Aizen SOT dyes such as Yellow-1, 3, 4, Orange-1, 2, 3, Scarlet-1, Red-1, 2, 3, Brown-2, Blue-1,2, Violet-1, Green-1, 2, 3, and Black-1, 4, 6, 8 (manufactured by Hodogaya Chemical Co., Ltd.); Sudan dyes such as Yellow-146, 150, Orange-220, Red-290, 380, 460, and Blue-670 (manufactured by BASF); Diaresin Yellow-3G, F, H2G, HG, HC, HL, Diaresin Orange-HS, G, Diaresin Red-GG, S, HS, A, K, H5B, Diaresin Violet-D, Diaresin Blue-J, G, N, K, P, H3G, 4G, Diaresin Green-C, and Diaresin Brown-A (manufactured by Mitsubishi Chemical Industries. Ltd.); Oil Color Yellow-3G, GG-S, #105, Oil Color Orange-PS, PR, #201, Oil Color Scarlet-#308, Oil Color Red-5B, Oil Color Brown-GR, #416, Oil Color Green-BG, #502, Oil Color Blue-BOS, UN, and Oil Color Black-HBB, #803, EB, EX (manufactured by Orient Chemical Industries, Ltd.); Sumiplast Blue-GP, OR, Sumiplast Red-FB, 3B, and Sumiplast Yellow FL7G, GC (manufactured by Sumitomo Chemical Co., Ltd.); and Kayaron Polyester Black EX-SF300, Kayaset Red-B, and Kayaset Blue-A-2R (manufactured by Nippon Kayaku Co., Ltd).

### ---Surfactant---

In the case where the particles produced by the method of the present invention are a toner, the raw materials preferably contain a surfactant. The surfactant is appropriately selected depending on the intended purpose without any limitation, provided that it contains, in a molecular thereof, a site having affinity to the compressive fluid, and a site having affinity to the toner.

In the case where the first compressive fluid is carbon dioxide, the surfactant is preferably a fluorosurfactant, a silicone surfactant, or a compound including a group having an affinity to carbon dioxide, such as a compound having a bulky functional group (e.g., a carbonyl group, a short-chain hydrocarbon group, and a propylene oxide group). Among them, preferred are a fluorosurfactant, a silicone surfactant, a carbonyl group-containing compound, and a polyethylene glycol (PEG) group-containing compound. These surfactants may be oligomers, or polymers.

As for the fluorosurfactant, a compound having a C1-C30 perfluoroalkyl group is preferably used. Among them, a high molecular weight fluorosurfactant is preferable, as it has excellent surface activating properties, and excellent charging ability and durability as contained in a toner. Here, examples of structural units of the fluorosurfactant is represented with the following formulae (1-1) and (1-2).

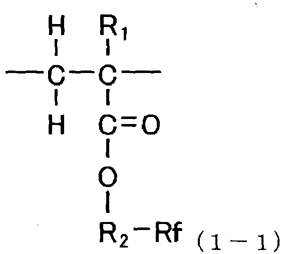

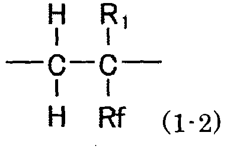

In the formulae (1-1) and (1-2), R₁ is a hydrogen atom or a C1-C4 lower alkyl group (e.g., a methyl group, an ethyl group, a propyl group, an isopropyl group, a n-butyl group, a sec-butyl group, and a tert-butyl group).

In the formula (1-1), R₂ is an alkylene group (e.g., a methylene group, an ethylene group, a propylene group, an isoprene group, a 2-hydroxypropylene group, a butylene group, and a 2-hydroxybutylene group).

In the formulae (1-1) and (1-2), Rf is a C1-C30 perfluoroalkyl group or perfluoroalkenyl group.

Among them, the preferable embodiment is a fluorosurfactant where R₁ is a hydrogen atom or a methyl group, R₂ is a methylene group or an ethylene group, and Rf is a C7-C10 perfluoroalkyl group. Note that, a plurality of each structural unit of the formulae (1-1) and (1-2) are bonded to each other to form an oligomer or polymer. In view of an affinity to particles (a toner), a homopolymer, a block copolymer or a random copolymer may be formed. Each terminal of the oligomers or polymer is appropriately selected depending on the intended purpose without any limitation, but it is preferably a hydrogen atom.

The silicone surfactant is not particularly limited, as long as it is a compound having a siloxane bond, and it may be a low molecular weight compound or a high molecular weight compound. Among them, preferred is a compound having a polydimethylsiloxane (PDMS) group represented by the following structural formula (2). Note that, the silicone surfactant may be a homopolymer, a block copolymer, or a random copolymer, in view of an affinity to a toner.

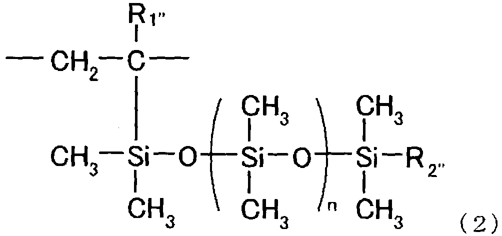

In the formula (2), R_{1"} is a hydrogen atom, or a C1-C4 lower alkyl group; n represents a number for repeating; and R_{2"} is a hydrogen atom, a hydroxyl group, or a C1-C10 alkyl group.

The carbonyl group-containing compound is appropriately selected depending on the intended purpose without any limitation, and examples thereof include aliphatic polyester, polyacrylate, and an acrylic acid resin.

The polyethylene glycol (PEG) group-containing compound is appropriately selected depending on the intended purpose without any limitation, and examples thereof include PEG group-containing polyacrylate, and a polyethylene glycol resin.

These surfactants may be obtained through polymerization of a vinyl monomer (e.g., an Rf group-containing vinyl monomer, a PDMS group-containing vinyl monomer, a PEG group-containing vinyl monomer) or through copolymerization of any of these vinyl monomers with another vinyl monomer. Examples of the vinyl monomer include a styrene monomer, an acrylate monomer, and a methacrylate monomer. These vinyl monomers are commercially readily available, and the vinyl monomer is appropriately selected from these commercial products depending on the intended purpose. Moreover, as the surfactant, a compound in which a Rf group, PDMS group, or PEG group forms a main chain of an oligomers or polymer, and a COOH group, OH group, amino group, or pyrrolidone skeleton is introduced into a side chain thereof may be used.

The fluorine group-containing surfactant is synthesized by polymerizing a fluorine-based vinyl monomer in a fluorine-based solvent, such as HCFC225. Moreover, in order to reduce an environmental load, the fluorine group-containing surfactant may be synthesized by polymerizing a fluorine-based vinyl monomer using supercritical carbon dioxide as a solvent, instead of HCFC225. Note that, various raw materials having a structure similar to a compound having a perfluoroalkyl group are commercially available (see a catalog of AZmax Corporation), and various surfactants can be obtained using these commercial products. Specifically, a method described in "Handbook of fluororesin" (edited by Takaomi Satokawa, published by Nikkan Kogyo Shimbun Ltd.) pp. 730 to 732, may be used.

Moreover, the silicone surfactant can be obtained through a vinyl polymerizable monomer, which is a raw material of the surfactant. In this case, a supercritical fluid (preferably supercritical carbon dioxide) may be used as a solvent. Moreover, various compounds each having the structure similar to polydimethylsiloxane are commercially available (for example, see a catalog of AZmax Corporation), and the silicone surfactant may be obtained using any of these commercial products. Especially, a silicon-containing compound (product name: MONASIL-PCA, manufactured by Croda Japan K.K.) exhibits excellent properties for forming particles.

An amount of the surfactant in the toner raw materials is preferably 0.01% by mass to 30% by mass, more preferably 0.1% by mass to 20% by mass.

### ---Dispersant---

The dispersant is appropriately selected depending on the intended purpose without any limitation, and examples thereof include organic particles, and inorganic particles. Among them, preferred are acryl-modified inorganic particles, silicone-modified inorganic particles, fluorine-modified inorganic particles, fluorine-containing organic particles, and silicone organic particles. Particularly preferred are acryl-modified inorganic particles. These dispersants are preferably selected from dispersants that can be dissolved in the compressive fluid.

Examples of the organic particles include a silicone-modified product of acrylic particles that are insoluble in a supercritical fluid, and a fluorine-modified product of acrylic particles that are insoluble in a supercritical fluid. Examples of the inorganic particles include: polyvalent metal phosphate, such as calcium phosphate, magnesium phosphate, aluminum phosphate, and zinc phosphate; carbonate, such as calcium carbonate, and magnesium carbonate; inorganic salt such as calcium metasilicate, calcium sulfate, barium sulfate; and inorganic oxide such as calcium hydroxide, magnesium hydroxide, aluminum hydroxide, silica, titanium oxide, bentonite, and alumina. Among them, silica is preferable.

Examples of the acryl-modified inorganic particles include inorganic particles in which a residual OH group present on a surface of each inorganic particle is modified with a silane coupling agent containing a fluorine atom. The reaction formula below illustrates an example of silica which is subjected to surface modification using 3-(trimethoxysil)propyl methacrylate.

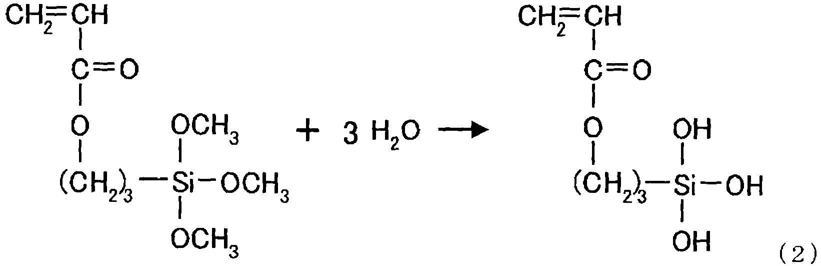

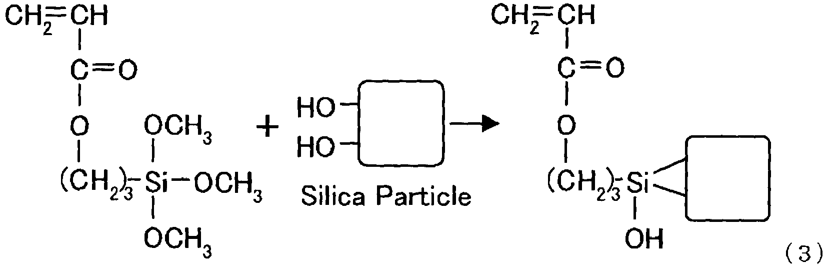

The acryl-modified silica obtained by the above-described method has a high affinity to supercritical carbon dioxide with its Si portion, and a high affinity to a toner with its acrylate portion. Note that, silica may be subjected to a surface modification in other methods, without using the reaction formula above, provided that the purpose is the same. Specific examples of the silane coupling agent containing a fluorine atom are listed below:

(4-1) CF₃(CH₂)₂SiCl₃

(4-2) CF₃(CF₂)₅SiCl₃

(4-3) CF₃(CF₂)₅(CH₂)₂SiCl₃

(4-4) CF₃(CF₂)₇(CH₂)₂SiCl₃

(4-5) CF₃(CF₂)₇CH₂CH₂Si(OCH₃)₃

(4-6) CF₃(CF₂)₇(CH₂)₂Si(CH₃)Cl₂

(4-7) CF₃(CH₂)₂Si(OCH₃)₃

(4-8) CF₃(CH₂)₂Si(CH₃)(OCH₃)₂

(4-9) CF₃(CF₂)₃(CH₂)₂Si(OCH₃)₃

(4-10) CF₃(CF₂)₅CONH(CH₂)₂Si(OC₂H₅)₃

(4-11) CF₃(CF₂)₄COO(CH₂)₂Si(OCH₃)₃

(4-12) CF₃(CF₂)₇(CH₂)₂Si(OCH₃)₃

(4-13) CF₃(CF₂)₇(CH₂)₂Si(CH₃)(OCH₃)₂

(4-14) CF₃(CF₂)₇SO₂NH(CH₂)₃Si(OC₂H₅)₃

(4-15) CF₃(CF₂)₈(CH₂)₂Si(OCH₃)₃

An amount of the dispersant in the toner raw materials is preferably 0.1% by mass to 30% by mass, more preferably 0.2% by mass to 20% by mass. The dispersant is preferably used alone, but the dispersant may be used in combination with another surfactant for the purpose of controlling particle diameters of a toner, or appropriately adjusting charging properties of a toner.

### ---Releasing Agent---

The releasing agent is appropriately selected depending on the intended purpose without any limitation, and examples thereof include wax. Examples of the wax include low molecular weight polyolefin wax, synthesized hydrocarbon wax, natural wax, petroleum wax, higher fatty acid and metal salt thereof, higher fatty acid amide, and various modified wax thereof. These may be used alone, or in combination.

Examples of the low molecular weight polyolefin wax include low-molecular weight polyethylene wax and low-molecular weight polypropylene wax. Examples of the synthesized hydrocarbon wax include Fischer-Tropsh wax. Examples of the natural wax include bee wax, carnauba wax candelilla wax rice wax and montan waxes. Examples of the petroleum wax include paraffin wax and microcrystalline waxes. Examples of the high fatty acid and metal salt thereof include stearic acid, palmitic acid, myristic acid, zinc stearate, and calcium stearate.

A melting point of the releasing agent is appropriately selected depending on the intended purpose without any limitation, but it is preferably 40°C to 160°C, more preferably 50°C to 120°C, and even more preferably 60°C to 90°C. When the melting point of the releasing agent is lower than 40°C, the wax may adversely affect heat resistant storage stability of a toner. When the melting point of the releasing agent is higher than 160°C, it is likely that cold offset may occur during a low-temperature fixing process, and a paper sheet may wind itself around the fixing device. Note that, the cold offset is a phenomenon that part of a toner image is removed by electrostatic force in a thermal fixing system, as the toner is not sufficiently melted at an interface with a sheet. It is also called as low temperature offset.

An amount of the releasing agent is appropriately selected depending on the intended purpose without any limitation, but it is preferably 1 part by mass to 20 parts by mass, more preferably 3 parts by mass to 15 parts by mass, relative to 100 parts by mass of the pressure plastic material. When the amount of the releasing agent is smaller than 1 part by mass, an effect of the releasing agent may not be exhibited sufficiently. When the amount thereof is greater than 20 parts by mass, heat resistant storage stability of a toner may be impaired.

### --- Charge Controlling Agent---

The charge controlling agent is appropriately selected depending on the intended purpose without any limitation, but it is preferably a colorless material or a material having a color close to white, because a colored material may adversely affect the intended color tone of a toner. Examples of the charge controlling agent include nigrosine dye, triphenylmethane dye, chrome-containing metal complex dye, molybdic acid chelate pigment, rhodamine dye, alkoxy amine, quaternary ammonium salt (including fluoride-modified quaternary ammonium salt), alkylamide, phosphorus or compound thereof, tungsten or compound thereof, fluorine-containing surfactant, metal salt of salicylic acid, and metal salt of a salicylic acid derivative. Among them, preferred are metal salt of salicylic acid and metal salt of a salicylic acid derivative. These may be used alone or in combination. The metal used for the metal salt is appropriately selected depending on the intended purpose without any limitation, and examples thereof include aluminum, zinc, titanium, strontium, boron, silicon, nickel, iron, chrome, and zirconium.

Examples of a commercial product of the charge controlling agent include: quaternary ammonium salt BONTRON P-51, oxynaphthoic acid metal complex E-82, salicylic metal complex E-84, phenolic condensate E-89 (manufactured by Orient Chemical Industries Ltd.); molybdenum complex of quaternary ammonium salt TP-302 and TP-415, and metal complex of salicylic acid TN-105 (manufactured by Hodogaya Chemical Co., Ltd.); quaternary ammonium salt copy charge PSY VP2038, triphenylmethane derivatives copy blue PR, quaternary ammonium salt copy charge NEG VP2036, copy charge NX VP434 (manufactured by Hochst); LRA-901, boron complex LR-147 (manufactured by Japan Carlit Co., Ltd.); quinacridone; azo pigment; and a high molecular weight compound having sulfonic acid group, carboxyl group, or quaternary ammonium salt group.

An amount of the charge controlling agent is appropriately selected depending on the intended purpose without any limitation, but it is preferably 0.5 parts by mass to 5 parts by mass, more preferably 1 part by mass to 3 parts by mass, relative to 100 parts by mass of the pressure plastic material. When the amount thereof is smaller than 0.5 parts by mass, the charging properties of a toner may be impaired. When the amount thereof is greater than 5 parts by mass, the charge of a toner becomes exceedingly enhanced, decreasing the effect of the charge controlling agent primarily used. Thus, an electrostatic force between the toner and a developing roller increases, which may cause low flowability of a developer, or low image density.

### ---Crystalline Polyester---

The crystalline polyester is appropriately selected depending on the intended purpose without any limitation, but it is preferably crystalline polyester having a sharp molecular weight and a low molecular weight in view of excellent low temperature fixing ability of a resulting toner. More preferred is the crystalline polyester having a peak in the range of 3.5 to 4.0 in a molecular weight M distribution curve of a o-dichlorobenzene soluble component as measured by GPC, where a peak width is 1.5 or less, and a horizontal axis is log(M) and a vertical axis is % by mass, having a weight molecular weight (Mw) of 1,000 to 30,000, a number average molecular weight (Mn) of 500 to 6,000, and Mw/Mn of 2 to 8.

A melting point and F1/2 temperature of the crystalline polyester are preferably low, as long as heat resistant storage stability is not impaired, more preferably the DSC endothermic peak temperature is 50°C to 150°C. The F1/2 temperature is measured as follows. A sample with a volume of 1 cm² is melted and allowed to flow using a elevated flow tester CFT-500 (manufactured by Shimadzu Corporation) under the following conditions: diameter of die: 1 mm; pressure applied: 10 kg/cm²; and heating rate: 3°C/min. Then, the temperature, at which half of the amount of the sample that has flowed from the flow starting time to the flow ending time is considered to have flowed, is defined as the F1/2 temperature of the sample. When the melting temperature and the F1/2 temperature are lower than 50°C, the heat-resistant storage stability may be degraded, and blocking may readily occur even at internal temperature of the developing device. When the melting temperature and the F1/2 temperature are higher than 150°C, sufficient low temperature fixing ability may not be obtained because the minimum fixing temperature becomes high.

An acid value of the crystalline polyester is preferably 5 mgKOH/g or greater in view of an affinity between paper and the resin, and low temperature fixing ability of a resulting toner, and more preferably 10 mgKOH/g or greater. Moreover, an acid value of the crystalline polyester is preferably 45 mgKOH/g or less in view of hot offset resistance of a toner. A hydroxyl value of the crystalline polyester is appropriately selected depending on the intended purpose without any limitation, but it is preferably 0 mgKOH/g to 50 mgKOH/g in view of low temperature fixing ability and charging properties of a resulting toner, and more preferably 5 mgKOH/g to 50 mgKOH/g.

An amount of the crystalline polyester is appropriately selected depending on the intended purpose without any limitation, but it is preferably 0 parts by mass to 900 parts by mass, more preferably 0.5 parts by mass to 500 parts by mass, and even more preferably 1 part by mass to 100 parts by mass, relative to 100 parts by mass of the pressure plastic material. When the amount thereof is smaller than 1 part by mass, low temperature fixing ability of a toner may not be achieved. When the amount thereof is greater than 900 parts by mass, the hot offset resistance of a toner may be impaired.

### --- Other Components---

Examples of other components used in combination with the pressure plastic material, as the toner raw material, include, other than the above, a flow improving agent, and a cleaning improving agent. The flow improving agent is an agent that improves hydrophobic properties of a toner through a surface treatment with the agent, and is capable of preventing degradation of flowability or charging properties of the toner even in high humidity environments. Examples of the flow improving agent include a silane coupling agent, a sililating agent, a silane coupling agent having a fluorinated alkyl group, an organotitanate coupling agent, an aluminum-based coupling agent, silicone oil, and modified silicone oil.

The cleaning improving agent is an agent added to the toner raw materials to remove the developer remained on a photoconductor or primary transfer medium after transferring. Examples of the cleaning improving agent include: fatty acid (e.g. stearic acid) metal salt, such as zinc stearate, and calcium stearate; and polymer particles prepared by soap-free emulsion polymerization, such as polymethyl methacrylate particles, and polystyrene particles. As the polymer particles, preferred are polymer particles having a relatively narrow particle size distribution, and more preferred are polymer particles having the volume average particle diameter of 0.01 µm to 1 µm.

### -Compressive Fluid-

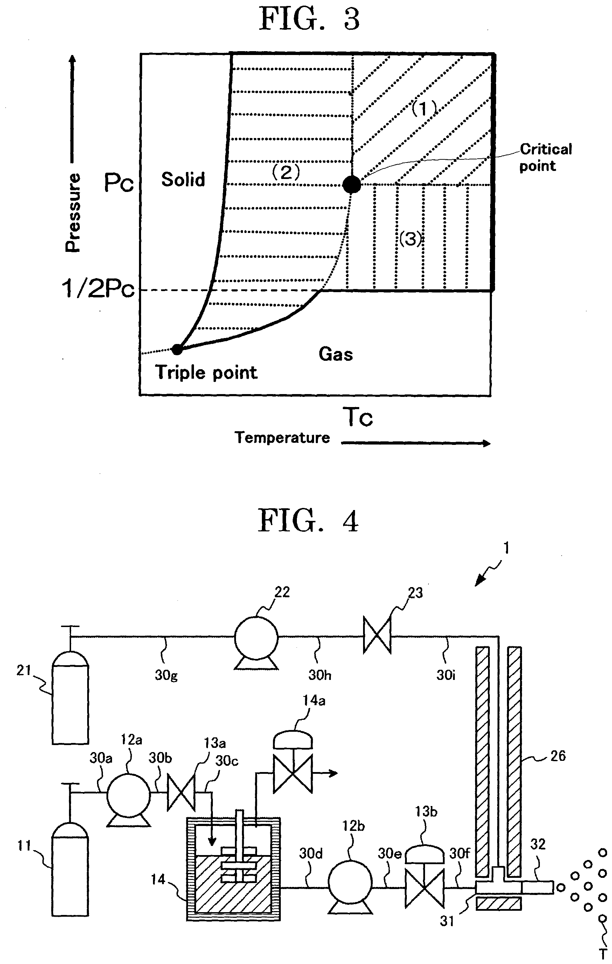

Next, the compressive fluid for use in the method for producing particles of the present invention will be explained with reference to FIGs. 2 and 3. FIG. 2 is a phase diagram illustrating a state of a substance depending on temperature and pressure. FIG. 3 is a phase diagram which defines a compressive fluid. The compressive fluid has characteristics that it is fast in mass transfer and heat transfer, is low in viscosity, and can continuously greatly change the density, dielectric constant, solubility parameter, free volume and the like by changing the temperature and pressure. Since the compressive fluid has an extremely small surface tension compared to those of organic solvents, the compressive fluid can follow a minute undulation (surface) to wet the surface with the compressive fluid. Moreover, the compressive fluid can be easily separated from a product, such as a toner, by returning the pressure to normal pressure, and therefore the compressive fluid can be recycled. Accordingly, the method for producing particles of the present invention can reduce environmental load due to the production, compared to the production using water or an organic solvent.

In the present specification, the "compressive fluid" refers to a substance present in any one of the regions (1), (2) and (3) of FIG. 3 in the phase diagram of FIG. 2. In such regions, the substance is known to have extremely high density and show different behaviors from those shown at normal temperature and normal pressure. Notably, the substance present in the region (1) is a supercritical fluid. The supercritical fluid is a fluid that exists as a noncondensable high-density fluid at a temperature and a pressure exceeding the corresponding critical points, which are limiting points at which a gas and a liquid can coexist. Also, the supercritical fluid does not condense even when compressed, and exists at critical temperature or higher and critical pressure or higher. Also, the substance present in the region (2) is a liquid, but in the present invention, is a liquefied gas obtained by compressing a substance existing as a gas at normal temperature (25°C) and normal pressure (1 atm). Further, the substance present in the region (3) is a gas, but in the present invention, is a high-pressure gas whose pressure is 1/2 Pc or higher.

A substance usable as the compressive fluid is appropriately selected depending on the intended purpose without any limitation, and examples thereof include carbon monoxide, carbon dioxide, nitrogen monoxide, nitrogen, air, argon, helium, neon, krypton, methane, ethane, propane, 2,3-dimethyl butane, ethylene, ammonia, n-butane, isobutane, n-pentane, isopentane, and chlorotrifluoromethane. These may be used alone or in combination.

In the method of the present invention, the first compressive fluid is not particularly limited as long as it can melt the pressure plastic material, but it is preferably carbon dioxide, as it can easily form a supercritical state, it is noninflammable and has high safety, and it contributes to produce a toner having a hydrophobic surface in the production of the toner.

In the method of the present invention, the second compressive fluid is a substance having the maximum inversion temperature of 800 K or lower. As for the second compressive fluid, a compressive fluid containing nitrogen is suitably used. Note that, the "containing nitrogen" means to contain a nitrogen molecule, and therefore it can be said that the air is also "nitrogen-containing." The nitrogen has the maximum inversion temperature of 620 K, and has the low maximum inversion temperature compared to that of a substance, such as carbon dioxide (maximum inversion temperature: 1,500 K). Therefore, reduction in temperature due to the Joule-Thomson effect when the pressure of nitrogen is reduced is small compared to the case where the pressure of the carbon dioxide is reduced. When the maximum inversion temperature of the second compressive fluid is excessively high, such as in the case of the carbon dioxide, cooling due to the Joule-Thomson effect becomes excessive when the melt is jetted. Therefore, the melt is solidified before the melt is formed into particles. As a result, fibrous or cohesion products may be included in a final product. When the cooling is excessive, moreover, the melt may be solidified inside a nozzle, which is used for jetting the melt, and therefore it may not be able to produce particles having small particle diameter with a narrow particle size distribution over a long period.

In the present invention, moreover, the compressive fluid may also be used together with an entrainer (cosolvent). Examples of the entrainer include: alcohol, such as methanol, ethanol, and propanol; ketone, such as acetone, and methyl ethyl ketone; and an organic solvent, such as toluene, ethyl acetate, and tetrahydrofuran.

Moreover, in the case where particles produced by the method for producing particles of the present invention are a toner, another fluid may be used in combination with the compressive fluid. As for the another fluid, preferred are fluids that can easily control solubility of a toner composition. Specific examples thereof include methane, ethane, propane, butane, and ethylene.

### [First Embodiment]

### [Apparatus for Producing Particles]

An apparatus for producing particles suitably used in the method for producing particles of the present embodiment will be explained with reference to FIG. 4. FIG. 4 is a schematic diagram illustrating one example of an apparatus for producing particles. The apparatus for producing particles 1 contains a bomb 11, pump 12a, valve 13a, high pressure cell 14, pump 12b, and valve 13b, which are connected with super high pressure pipes (30a, 30b, 30c, 30d, 30e, 30f) to constitute a first path. Moreover, the apparatus for producing particles 1 contains a bomb 21, a pump 22, and a valve 23, which are connected with super high pressure pipes (30g, 30h, 30i) to constitute a second path, and a heater 26 configured to heat inside the super high pressure pipe 30i. The apparatus for producing particles 1 further contains a blending device 31 one end of which is connected to an edge of a first path pipe 30f and an edge of a second path pile 30i, and a nozzle 32 whish is connected with the other end of the blending device 31.

The bomb 11 provided on the first path is a pressure resistant container for storing and supplying a first compressive fluid. The bomb 11 may store gas or a solid that will be a compressive fluid upon application of heat or pressure during the process that it is supplied to the high pressure cell 14, or within the high pressure cell 14. In this case, the gas or solid stored in the bomb 11 is turned into the state of (1), (2) or (3) of the phase diagram of FIG. 3 in the high pressure cell 14 by applying heat or pressure. The pump 12a is a device for sending the compressive fluid stored in the bomb 11 to the high pressure cell 14 provided on the first path. The valve 13a is a device configured to open or close a path between the pump 12a and the high pressure cell 14 to adjust the flow rate of the compressive fluid, or to shut off the flow thereof.

The high pressure cell 14 is equipped with a thermoregulator, and is a device configured to bring the compressive fluid, which has been supplied through the valve 13a, and a pressure plastic material, which has been loaded in the high pressure cell 14 in advance, into contact at predetermined temperature or lower to melt the pressure plastic material. A back pressure valve 14a is provided to the high pressure cell 14, and the internal pressure of the high pressure cell 14 can be controlled by opening or closing the back pressure valve 14a. Moreover, a stirrer is provided to the high pressure cell 14, and the compressive fluid and the pressure plastic material can be mixed by stirring using the stirrer.

The pump 12b is a device for sending the melt in the high pressure cell 14 to the blending device 31. The valve 13b is a device configured to open or close the path between the pump 12b and the blending device 31 to adjust the flow rate of the melt obtained by melting the pressure plastic material, or to shut off the flow thereof. In the present embodiment, the apparatus for producing particles 1 does not directly jet the melt in the high pressure cell 14, but jet the melt from the nozzle 32 after passing the melt through the super high pressure pipes (30d, 30e, 30f). As a result, the compressive fluid mixed with the pressure plastic material in the high pressure cell 14 is sufficiently diffused in the pressure plastic material, and therefore processability improves.

The bomb 21 of the apparatus for producing particles 1 is a pressure resistant container for storing and supplying a second compressive fluid containing nitrogen. The bomb 21 may store therein gas or a solid that will be turned into a compressive fluid by applying heat or pressure in the course of supplying the gas or solid to the blending device 31. In this case, the gas or solid stored in the bomb 21 is turned into a state of (1), (2), or (3) of the phase diagram of FIG. 3 in the blending device 31.

The pump 22 is a device for sending the second compressive fluid stored in the bomb 21 to the blending device 31. The valve 23 is a device configured to open or close the path between the pump 22 and the blending device 31 to adjust the flow rate of the second compressive fluid, or to shut off the flow thereof.

The heater 26 is a device for heating the compressive fluid passing through the super high pressure pipe 30i. Note that, the compressive fluid heated by the heater 26 will be cooled at an outlet of the heater 26 due to the Joule-Thomson effect, and therefore the compressive fluid is preferably sufficiently heated to be in a supercritical state (1) of the phase diagram of FIG. 3.

The blending device 31 of the apparatus for producing particles 1 is a device for mixing the melt supplied from the first oath and the second compressive fluid supplied from the second path. Moreover, the other end of the blending device 31 is connected with the nozzle 32. In the present embodiment, the blending device 31 has a turbulent mixing system for homogeneously mixing the compressive fluid and the pressure plastic material. Specific examples of the blending device 31 include a conventional T-shape coupling, a swirl mixer which actively utilizes a swirl flow, and a central collision mixer in which two fluids are brought into collision in a mixing part.

In the case where fluids each having different viscosity, such as a resin melt and a compressive fluid, are mixed by means of a static mixer such as the one disclosed in PTL 3 (JP-B No. 4113452), it is often difficult to homogeneously mix both fluids together. The static mixer has a mixing element (element) in a tubular housing. This element does not have a moving part, but has a plurality of baffle plates arranged around a tube axis in the axial direction. In the case where the static mixer is used, the element in the tube gives actions of dividing, turning over, and reversing to the fluid to mix, in the process that the fluid goes through the tubular housing. Moreover, as another type of a static mixer, known is a static mixer in which a large number of elements, each of which is formed of a honeycomb-shaped plate containing polygonal cells, are arranged together. In such the static mixer, a fluid is mixed by receiving actions of dividing, turning over, and reversing, as the fluid sequentially moves through cells in a center part of the tube to cells in an outer part of the tube, and through the cells in the outer part of the tube to the cells in the center part of the tube.

When a high viscous fluid, such as a resin, and a low viscous fluid, such as a compressive fluid, is passed through any of the aforementioned static mixers, the low viscous fluid passes through a space between the element inside tube and the tube housing without receiving a mixing action from the element, and therefore these fluids cannot be homogeneously mixed. As countermeasure for such mixing failure, a method for designing a more complicated element structure, or a method for increasing a length of a mixer is considered. These countermeasures are, however, not an effective measure for preventing a low viscous fluid to pass through, and cause problems, such as an increase in pressure loss during mixing, increase in a size of a device, and increase in labor for washing.

The nozzle 32 is a device for jetting the melt. One end of the nozzle 32 is connected to the blending device 31. As a result, the melt can be jetted from the nozzle 32 to the atmosphere due to the pressure difference, while supplying the second compressive fluid to the melt. As the second compressive fluid is supplied to the melt, the pressure loss in the nozzle 32 can be prevented. Therefore, decrease in the temperature due to the Joule-Thomson effect is suppressed, which improves processability. As a result, it is possible to produce particles even through an amount of a wax component added to the raw material is small and a molecular weight of the pressure plastic material is high.

A type of the nozzle 32 is not particularly limited, but a direct jet nozzle is preferably used as the nozzle 32. A diameter of the nozzle 32 is not particularly limited, as long as the nozzle can maintain the pressure constant during jetting. When the diameter thereof is excessively large, however, the pressure at the time of jetting excessively decreases, and the viscosity of the melt is increased, possibly causing difficulty in producing particles. In some cases, it is necessary to increase the size of the pump 22 or the like for maintaining the pressure inside the nozzle 32. On the other hand, when the diameter of the nozzle is excessively small, the nozzle 32 is easily clogged with the melt, possibly causing difficulty in obtaining desired particles. Accordingly, there is no upper limit of the nozzle diameter, and the lower limit thereof is preferably 5 µm or greater, more preferably 20 µm or greater, and even more preferably 50 µm or greater.

### [Each Step in Production of Particles]

Each step for producing a toner, as one example of the particles, using the apparatus for producing particles 1 of FIG. 4 will be explained. The method for producing particles of the present embodiment contains bringing a first compressive fluid and a pressure plastic material into contact with each other to melt the pressure plastic material (melting step), mixing the melt of the polyester resin obtained by contacting with the first compressive fluid and a second compressive fluid containing nitrogen; and jetting the melt of the polyester resin obtained by mixing with the second compressive fluid, to thereby form particles (particle forming step).

### <Melting Step>

First, the melting step of the method for producing particles of the present embodiment will be explained. As described above, in the present embodiment, the "melted" or "melting" means a state of the raw materials, such as the pressure plastic material, that the raw materials are plasticized, and liquidized with swelling. As for a method for precipitating a material in a supercritical fluid under the reduced pressure, a rapid expansion process has been known in the art. Among the rapid expansion processes, a target to be jetted used in a method known as the Rapid Expansion of Supercritical Solutions (RESS) process is formed by dissolving a material as a solute in a compressive fluid, and the fluid is uniformly compatible with the material. On the other hand, in the present embodiment, Particle from Gas Saturated Solutions (PGSS) process is used among the rapid expansion processes. The melt, which is a target to be jetted in the PGSS process, is obtained, as described above, by bringing the compressive fluid into contact with the pressure plastic material, followed by wetting, so as to decrease the viscosity of the pressure plastic material. Thus, there is an interface between the compressive fluid and the melt of the pressure plastic material. Namely, the target to be jetted in the RESS process is in the state of compressive fluid-solid phase equilibrium. The target in the PGSS process is, on the other hand, in the state of gas-liquid phase equilibrium. Accordingly, even in the rapid expansion processes, the phase state of the target to be jetted before expansion is different.

In the melting step, first a high pressure cell 14 is charged with raw materials, such as a pressure plastic material and a colorant. In the case where the raw materials include a plurality of materials, these materials may be mixed by a mixer or the like in advance, and then melt kneaded by a roll mill or the like before the high pressure cell 14 is charged with the raw materials. Next, the high pressure cell 14 is sealed, and the raw materials are stirred by a stirrer of the high pressure cell 14. Subsequently, the pump 12a is operated to compress the first compressive fluid stored in the bomb 11, and the valve 13a is open to thereby supply the first compressive fluid into the high pressure cell 14. In the present embodiment, a carbonic acid gas (carbon dioxide) bomb is used as the bomb 11. The temperature inside the high pressure cell 14 is adjusted to the temperature at which the supplied carbon dioxide is turned into a compressive fluid, by a thermoregulator. Note that, the upper limit of the temperature inside the high pressure cell 14 is appropriately selected depending on the intended purpose without any limitation, but it is preferably equal to or lower than the thermal decomposition temperature of the pressure plastic material under the atmospheric pressure, more preferably equal to or lower than the melting point of the pressure plastic material. In the present embodiment, the thermal decomposition temperature means onset temperature for weight loss of a sample due to thermal decomposition thereof, as measured by a thermo gravimetry analyzer (TGA). When the temperature inside the high pressure cell 14 is higher than the thermal decomposition temperature, the pressure plastic material may be oxidized, or may be deteriorated due to scission of molecular chains thereof, which may lead to low durability of the pressure plastic material. Moreover, a resulting toner, as a final product, may have undesirable color tone, transparency, fixing property, heat resistant storage stability, and charging property. Further, energy consumption of the heating process increases.

The pressure in the high pressure cell 14 can be adjusted to the predetermined pressure by adjusting the pump 12a, and the back pressure valve 14a. In the melting step of the method for producing particles of the present embodiment, the pressure applied to the raw materials, such as the pressure plastic material, in the high pressure cell 14 is appropriately selected depending on the intended purpose without any limitation, but it is preferably 1 MPa or greater, more preferably 10 MPa to 200 MPa, and even more preferably 31 MPa to 100 MPa. When the pressure inside the high pressure cell 14 is less than 1 MPa, it may not be able to attain a plasticizing effect enough to form the pressure plastic material into particles. It is no problem however high the pressure inside of the high pressure cell 14 is, but higher pressure thereof requires a durable device, which increase an equipment cost.

In the high pressure cell 14, the pressure plastic material is melted by bringing the compressive fluid and the raw materials containing the pressure plastic material into contact. The melt obtained by melting the pressure plastic material is stirred by the stirrer until the viscosity of the melt becomes constant. The viscosity of the melt is not particularly limited as long as it is the viscosity at which the melt can be jetted from the nozzle 32. The lower the viscosity thereof is, it is more preferable because the melt can be jetted with a small nozzle diameter, and the melt can be easily formed into fine particles. Accordingly, the viscosity of the melt is preferably 500 mPa·s or lower, more preferably 300 mPa·s or lower, and even more preferably 100 mPa·s or lower. In order to attain a toner capable of forming high quality images, the viscosity of the melt is preferably 20 mPa·s or lower. When the viscosity of the melt is greater than 500 mPa·s, it may be difficult to form particles, or coarse particles, fibrous products, foam, or cohesion of particles may be formed. Note that, the pressure plastic material is used in the present embodiment, and therefore the viscosity of the pressure plastic material can be reduced by the pressure of the compressive fluid. As a result, the pressure plastic material and the compressive fluid are homogeneously mixed to yield a melt having a low viscosity.

### <Particle Forming Step>

Subsequently, the particle forming step of the method for producing particles of the present embodiment is explained. First, the pump 22 is operated and the valve 23 is open so that the second compressive fluid stored in the bomb 21 is supplied to the blending device 31. In the present embodiment, a nitrogen bomb is used as the bomb 21. The pressure of the second compressive fluid supplied is appropriately selected depending on the intended purpose without any limitation, but it is preferably 1 MPa or greater, more preferably 10 MPa to 200 MPa, and even more preferably 31 MPa to 100 MPa. When the pressure applied to the second compressive fluid is smaller than 1 MPa, it may not be able to attain a plasticizing effect enough to form the pressure plastic material into particles. It is no problem however high the pressure is, but higher pressure thereof requires a durable device, which increase an equipment cost. The second compressive fluid to be supplied is heated by a heater 26 in the super high pressure pipe 30i. The set temperature of the heater 26 is not particularly limited as long as it is temperature at which the supplied nitrogen is turned into a compressive fluid.

Next, the pump 12b is operated and the valve 13b is open so that the melt of the pressure plastic material in the high pressure cell 14 to the blending device 31. During this process, the pump 12a, back pressure valve 14a, thermoregulator and the like are controlled to maintain the temperature and pressure inside the high pressure cell 14 constant. The pressure inside the high pressure cell 14 is not particularly limited, but it can be the identical pressure to the pressure of the compressive fluid supplied from the second path. The melt supplied from the high pressure cell 14 and the second compressive fluid supplied from the bomb 21 are homogeneously mixed by the blending device 31. As a result of this, the melt can be jetted from the nozzle 32 due to the pressure difference, while supplying the second compressive fluid to the melt.

In this case, the solid content of the melt jetted is reduced by the supplied second compressive fluid, and therefore the viscosity of the melt is further reduced. As a result, the jet speed (outlet linear speed) increases and shearing force to the melt increases due to the increase in the outlet linear speed, as well as controlling the temperature of the jetted melt constant. Since nitrogen is used as the second compressive fluid, moreover, a decrease in temperature due to the Joule-Thomson effect, which is caused along the change in the pressure adjacent to the nozzle 32, is inhibited, which prevents clogging of the nozzle 32. The melt jetted from the nozzle 32 is formed into particles, followed by solidified. During this process, uniform fine particles without cohesion can be obtained over a long period because of a synergistic effect of the low viscosity and low solid content of the melt. Moreover, shapes of produced particles can be also uniformly stabilized.

### [Second Embodiment]

The second embodiment of the present invention will be explained next. In the explanation below, different points from the first embodiment are explained, and the identical points are not explained.

### [Apparatus for Producing Particles]

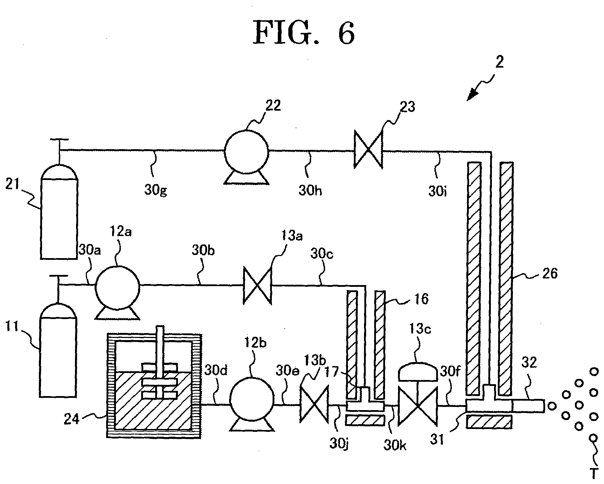

First, the apparatus for producing particles for use in the method for producing particles of the present embodiment is explained with reference to FIG. 6. FIG. 6 is a schematic diagram illustrating one example of the apparatus for producing particles. In FIG. 6, the units, systems, and devices identical to those of the apparatus for producing particles 1 of FIG. 4 are identified with the same reference numbers.

The apparatus for producing particles 2 is different from the apparatus for producing particles 1 of the first embodiment in that the apparatus for producing particles contains a bomb 11, a pump 12a, a valve 13a, a cell 24, a pump 12b, a valve 13b, a valve 13c, a blending device 17, and a heater 16, which are connected with super high pressure pipes (30a, 30b, 30c, 30d, 30e, 30f, 30j, 30k) in the manner as illustrated in FIG. 6.

The bomb 11 is a pressure resistant container for storing and supplying a first compressive fluid. The bomb 11 may store therein gas or a solid, which will be turned into the compressive fluid by applying heat or pressure during the process for supplying it to the cell 24, or inside the cell 24. In this case, the gas or solid stored in the bomb 11 is turned into the state of (1), (2), or (3) of the phase diagram of FIG. 3 in the cell 24 by applying heat or pressure. The pump 12a is a device configured to send the compressive fluid stored in the bomb 11 to the blending device 17. The valve 13a is a device configured to open or close the path between the pump 12a and the blending device 17 to adjust the flow rate of the compressive fluid, or to shut off the flow thereof. The heater 16 is configured to heat the compressive fluid passing through the super high pressure pipe 30c.

The cell 24 is equipped with a thermoregulator, and is a device configured to bring a pressure plastic material, which has been loaded in the cell 24 in advance, and the compressive fluid into contact with each other at the predetermined temperature or lower, to heat the pressure plastic material. The cell 24 is further equipped with a stirrer, and the compressive fluid and the pressure plastic material may be stirred by the stirrer to uniformly heat the pressure plastic material.

The pump 12b is a device for sending the pressure plastic material in the cell 24 to the blending device 17. The valve 13b is a device configured to open or close the path between the pump 12b and the blending device 17 to adjust the flow rate of a melt obtained by melting the pressure plastic material, or to shut off the flow thereof.

The blending device 17 is a device for mixing the pressure plastic material supplied from the high pressure cell and the first compressive fluid supplied from the bomb 11. Specific examples of the blending device 17 include a conventional T-shape coupling, a swirl mixer which actively utilizes a swirl flow, and a central collision mixer in which two fluids are brought into collision in a mixing part. The valve 13c is a device configured to open or close the path between the blending device 17 and the blending device 31 to adjust the flow rate of the melt, or to shut off the flow thereof.

### [Each Step in Formation of Particles]

Each step for producing a toner, as one example of the particles, using the apparatus for producing particles 2 of FIG. 6 will be explained. The method for producing particles of the second embodiment contains: bringing a pressure plastic material, which has been heated in advance, and a first compressive fluid into contact with each other to obtain a melt (melting step), and jetting the melt with supplying a second compressive fluid to the melt, to thereby form particles (particle forming step).

### <Melting Step>

First, the melting step of the method for producing particles of the present embodiment will be explained. In the melting step, first, a cell 24 is charged with raw materials, such as a pressure plastic material, and a colorant. In the case where the raw materials include a plurality of materials, these materials may be mixed by a mixer or the like in advance, and then melt kneaded by a roll mill or the like before the cell 24 is charged with the raw materials. Next, the cell 24 is sealed, and the raw materials are heated while being stirred by a stirrer of the cell 24. Here, the temperature inside the cell 24 is not particularly limited as long as it is temperature at which the pressure plastic material is plasticized. As a result of this process, the pressure plastic material is plasticized.

Subsequently, the pump 12a is operated to compress carbon dioxide as the first compressive fluid stored in the bomb 11, and the valve 13a is open to supply the first compressive fluid to the blending device 17. In the present embodiment, a carbonic acid gas (carbon dioxide) bomb is used as the bomb 11. The pressure applied to the compressive fluid by the pump 12a can be set to approximately the identical pressure to the pressure applied to the second compressive fluid by the pump 22. The first compressive fluid to be supplied is heated by the heater 16 inside the super high pressure pipe 30c. The set temperature of the heater 16 is not particularly limited as long as it is temperature at which the supplied carbon dioxide is turned into a compressive fluid.

Subsequently, the pump 12b is operated and the valve 13b is open so that the pressure plastic material supplied from the cell 24 and the first compressive fluid supplied from the bomb 11 are continuously brought into contact with each other in the blending device 17 and are homogeneously mixed. As a result, the pressure plastic material is melted. The viscosity of the melt obtained by melting the pressure plastic material is not particularly limited as long as it is the viscosity at which the melt obtained by melting the pressure plastic material can be jetted from the nozzle 32. The viscosity of the melt is, however, preferably 20 mPa·s or lower, because the lower the viscosity is it is easier to form fine particles during jetting. When the viscosity of the melt is greater than 20 mPa·s, it may be difficult to form particles, or coarse particles, fibrous products, foam, or cohesion of particles may be formed. In the case where a final product is a toner, moreover, it may be difficult to form uniform fine particles having a required size of 4 µm to 8 µm.

### <Particle Forming Step>

Subsequently, the particle forming step of the method for producing particles of the present embodiment is explained. First, the pump 22 is operated and the valve 23 is open so that the second compressive fluid stored in the bomb 21 is supplied to the blending device 31. In the present embodiment, a nitrogen bomb is used as the bomb 21. The pressure of the second compressive fluid supplied is not particularly limited, and it can be set to the approximately same pressure to that in the first embodiment, The second compressive fluid to be supplied is heated by the heater 26 inside the super high pressure pipe 30i. The set temperature of the heater 26 is not particularly limited, as long as it is temperature at which the supplied nitrogen is turned into a compressive fluid.

Next, the valve 13c is open so that the melt obtained by melting the pressure plastic material in the blending device 17 is supplied to the blending device 31. The melt supplied from the cell 24 and the second compressive fluid supplied from the bomb 21 are homogeneously mixed in the blending device 31. The melt mixed in the blending device 31 is continuously jetted from the nozzle 32 to the atmosphere due to the pressure difference. In the manner as described, the melt can be jetted from the nozzle 32 while supplying the second compressive fluid to the melt. The melt jetted from the nozzle 32 is formed into particles, followed by solidified. Since particles can be produced without using a high pressure cell in accordance with the method for producing particles of the second embodiment, weight of the apparatus can be reduced.

### [Supplement to Embodiments]

In the first and second embodiments, the cases where the apparatuses for use in the method for producing particles are the apparatuses for producing particles (1, 2) depicted in FIGs. 4 and 6 are explained, but the apparatus is not limited to those apparatuses. Instead of the apparatus for producing particles (1, 2), a device provided with a conventional jet device for use in the PGSS process, various unit of the second path, and the blending unit 31 can be used.

In the embodiments above, the cases where the melt containing the pressure plastic material and the compressive fluid is jetted into the atmosphere are explained, but an embodiment of the present invention is not limited to these cases. For example, the melt can be jetted into the atmosphere the pressure of which is higher than the atmospheric pressure, but lower than the pressure inside the nozzle 32. In this case, control over the particle diameter or particle size distribution can be improved by controlling the jet speed (outlet linear velocity). Moreover, a cooling effect to the melt jetted from the nozzle 32 due to the Joule-Thomson effect can be suppressed, and therefore heating by the heater 26 can be avoided, which leads to energy saving and cost saving.

### (Particles)

In the present specification, an example of producing a toner as the particles has been explained, but the particles to be produced are appropriately selected depending on the intended purpose without any limitation. Examples of the particles include particles of daily use products, medical products, and cosmetic products. The shape, size, and material of the particles produced by the method of the present invention are appropriately selected depending on the intended final product without any limitation. The method for producing particles of the present invention can produce particle without using an organic solvent, as a compressive fluid is used. Therefore, particles, which do not substantially contain an organic solvent, can be obtained. Note that, the particles, which do not substantially contain an organic solvent, mean that an amount of the organic solvent in the particles as measured by the following method is equal to or less than the detection limit.

### (Measurement Method of Residual Solvent)

The amount of the residual solvent of the particles is measured in the following measurement method. To 1 part by mass of particles to be measured, 2 parts by mass of 2-propanol is added, and dispersed by ultrasonic wave for 30 minutes, and then the mixture is stored in a refrigerator (5°C) for 1 day or longer, to thereby extract a solvent in the particles. A supernatant liquid is analyzed by gas chromatography (GC-14A, manufactured by Shimadzu Corporation), to determine the amount of the solvent and a residual monomer in the particles. Thus, the concentration of the solvent is measured. The measurement conditions for such analysis are as follows.
Device: Shimadzu GC-14A
Column: CBP20-M 50-0.25
Detector: FID
Injection volume: 1 µL to 5 µL
Carrier gas: He 2.5 kg/cm²
Flow rate of hydrogen: 0.6 kg/cm²
Flow rate of air: 0.5 kg/cm²
Chart speed: 5 mm/min
Sensitivity: Range 101 × Atten 20
Column temperature: 40°C
Injection temperature: 150°C

### (Toner)

The particles produced by the method for producing particles of the present invention are preferably a toner.

The toner of the present invention is the toner produced by the method for producing particles, and contains at least a pressure plastic material, and contains substantially no organic solvent. The toner may further contain other raw materials, if necessary.

The toner produced by the method for producing particles of the present invention is not particularly limited in terms of the properties thereof, such as a shape, and a size. However, the toner preferably has image density, average circularity, mass average particle diameter and a ratio (mass average particle diameter/number average particle diameter) of the mass average particle diameter to the number average particle diameter as described below.

The image density of the toner is appropriately selected depending on the intended purpose without any limitation, but the gray level thereof as measured by a spectrometer (938 spectrodensitometer, manufactured by X-Rite) is preferably 1.90 or greater, more preferably 2.00 or greater, and even more preferably 2.10 or greater. When the image density is less than 1.90, the image density of an image is low, and therefore a high quality image may not be obtained. Here, the image density can be measured, for example, in the following manner. By means of imagio Neo 450 (manufactured by Ricoh Company Limited), a solid image is formed on a photocopy sheet (TYPE6000<70W>, manufactured by Ricoh Company Limited) to give a developer deposition amount of 1.00 ± 0.05 mg/cm² with a fixing roller having surface temperature of 160 °C ± 2 °C. The image density of the obtained solid image is measured at randomly selected 6 points by means of the aforementioned spectrometer. The average value is calculated from the measured values, and determined as the image density.

The average circularity of the toner is appropriately selected depending on the intended purpose without any limitation, but it is a value obtained by dividing a circumferential length of an equivalent circle having the same projection area to that of the toner by a circumferential length of an actual particle. The average circularity of the toner is preferably 0.900 to 0.980, more preferably 0.950 to 0.975. Moreover, a proportion of the particles having the average circularity of less than 0.94 is preferably 15% by mass or less. When the average circularity is less than 0.900, it may not be able to attain desirable transfer property, or to produce a high quality image without dusts. When the average circularity is more than 0.980, in an image forming system using blade cleaning technique, cleaning defects occur on a photoconductor or a transfer belt, image smear, for example, in a case of formation of an image having a high-image area ratio such as photographic image, a toner forming an untransferred image due to a paper-feeding defect or the like accumulates on the photoconductor remains an untransferred toner thereon, or the untransferred toner may cause background smear on images, or a charging roller etc. that contact-charges the photoconductor is contaminated with the untransferred toner, thereby the toner may not exert its intrinsic charging ability.

The average circularity can be measured by means of a flow particle image analyzer, for example, a flow particle image analyzer FPIA-2000, manufactured by Sysmex Corporation. In the measurement, fine dust is removed from water using a filter, such that the number of particles inside a measured area (for example, 0.60 µm or larger but smaller than 159.21 µm in circle equivalent diameter) in 10⁻³ cm³ of the water is 20 or fewer, then a few drops of a nonionic surfactant (preferably, CONTAMINON N, manufactured by Wako Pure Chemical Industries, Ltd.) are added into 10 mL of the water. Then 5 mg of a measurement sample is further added in the water, dispersion is carried out for 1 minute under conditions of 20 kHz and 50 W/ 10 cm³ using the ultrasonic dispersing apparatus UH-50 (manufactured by SMT Co., Ltd.), dispersion is further carried out for a total of 5 minutes, and the particle size distribution of particles which are 0.60 µm or larger but smaller than 159.21 µm in circle equivalent diameter is measured using a sample dispersion liquid in which the measurement sample has a particle concentration of 4,000 particles/10⁻³ cm³ to 8,000 particles/10⁻³ cm³ (when particles belonging to the measurement circle equivalent diameter range are targeted).

The sample dispersion liquid is passed through a flow path (which widens with respect to the flow direction) of a flat, transparent flow cell (approximately 200 µm in thickness). To form an optical path which advances intersecting the thickness of the flow cell, a strobe and a CCD camera are provided so as to be positioned oppositely to each other with respect to the flow cell. A strobe light is emitted at intervals of 1/30 seconds to obtain images of particles flowing in the flow cell; as a result, the particles are photographed as two-dimensional images having certain areas which are parallel to the flow cell. Based upon the areas of the two-dimensional images of the particles, the diameters of circles having the same areas are calculated as circle equivalent diameters.

The circle equivalent diameters of 1,200 or more particles can be measured in approximately 1 minute, and the number of particles based upon the distribution of the circle equivalent diameters, and the proportion (number %) of particles having a prescribed circle equivalent diameter can be measured. The results (frequent % and cumulative %) can be obtained dividing the range of 0.06 µm to 400 µm into 226 channels (one octave is divided into 30 channels). The practical measurement of particles is carried out concerning particles which are 0.60 µm or lager but smaller than 159.21 µm in circle equivalent diameter.

The mass average particle diameter of the toner is appropriately selected depending on the intended purpose without any limitation, but it is preferably 3 µm to 10 µm, more preferably 3 µm to 8 µm. When the mass average particle diameter thereof is smaller than 3 µm, the toner of a two-component developer may be fused onto a surface of a carrier particle after being stirred over a long period in a developing device, lowering the charging ability of the carrier. In the case where the toner is a one-component developer, the toner may cause filming to a developing roller, or may be fused onto a member for thinning a toner layer, such as a blade. When the mass average particle diameter is greater than 10 µm, it is difficult to produce an image having high resolution and high quality, and a variation in the particle size of the toner may be large when the toner is supplied to the developer to compensate the consumed toner.

A ratio (mass average particle diameter/number average particle diameter) of the mass average particle diameter to the number average particle diameter is appropriately selected depending on the intended purpose without any limitation, but it is preferably 1.00 to 1.25, more preferably 1.00 to 1.10. When the ratio (mass average particle diameter/number average particle diameter) of the mass average particle diameter to the number average particle diameter is greater than 1.25, in case of a two-component developer, a toner is fused onto a surface of carrier due to stirring performed over a period in a developing device, which may reduce charging ability of the carrier. When the ratio (mass average particle diameter/number average particle diameter) of the mass average particle diameter to the number average particle diameter is greater than 1.25, in case of a one-component developer, the toner may cause filming to a developing roller, or may be fused onto a member for thinning a toner layer, such as a blade. Moreover, it is difficult to produce an image having high resolution and high quality, and a variation in the particle size of the toner may be large when the toner is supplied to the developer to compensate the consumed toner.

The mass average particle diameter, and the ratio (mass average particle diameter/number average particle diameter) of the mass average particle diameter to the number average particle diameter can be measured, for example, by means of a particle size analyzer, Coulter Counter TAII, manufactured by Beckman Coulter, Inc.

### (Developer)

The developer of the present invention will be explained next. The developer of the present invention is appropriately selected depending on the intended purpose without any limitation, provided that it contains the toner produced by the aforementioned method. Specific examples of the developer contains a one-component developer containing the toner produced by the aforementioned method, and a two-component developer containing the toner produced by the aforementioned method and a magnetic carrier. Examples of the toner include a color toner (e.g., yellow, cyan, magenta, and black), and a clear toner.

### <Magnetic Carrier>

The magnetic carrier is appropriately selected depending on the intended purpose without any limitation, provided that it contains a magnetic material. Specific examples of the magnetic carrier include hematite, iron powder, magnetite, and ferrite. An amount of the magnetic carrier is preferably 5% by mass to 50% by mass, more preferably 10% by mass to 30% by mass, relative to 100% by mass of the toner.

### (Image Forming Apparatus)

The image forming apparatus of the present invention contains at least: a latent electrostatic image bearing member; a latent electrostatic image forming unit configured to form a latent electrostatic image on the latent electrostatic image bearing member; a developing unit configured to develop the formed latent electrostatic image with a toner to form a visible image; a transferring unit configured to transfer the developed visible image to a recording medium; and a fixing unit configured to fix the transferred visible image on the recording medium. The image forming apparatus of the present invention may further contain other units, if necessary.

The aforementioned toner is the toner of the present invention.

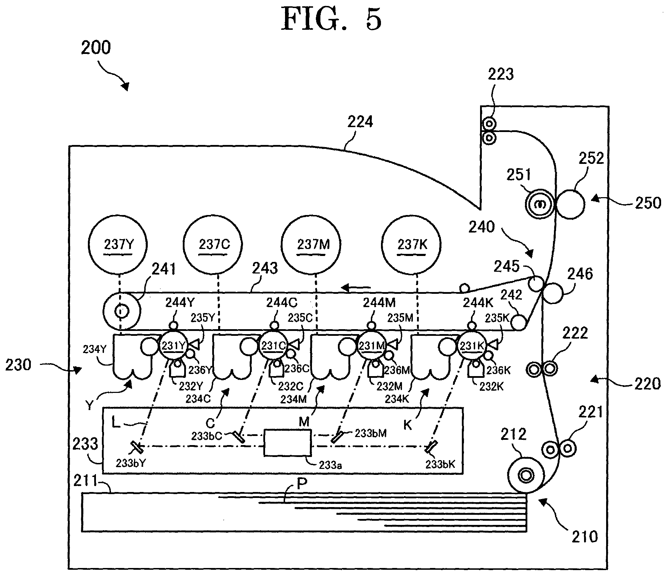

The image forming apparatus of the present invention will be explained with reference to FIG. 5 hereinafter. FIG. 5 is a schematic diagram illustrating one example of the image forming apparatus of the present invention. The image forming apparatus 200 develops a latent electrostatic image with the toner produced by the method for producing particles described above to form a visible image, transfers the visible image to a sheet, which is one example of a recording medium, and fixes the visible image on the sheet to form an image. In the present specification, an example where the image forming apparatus 200 is an electrophotographic printer is explained, but the image forming apparatus is not limited to the electrophotographic printer, and may be a photocopier, or a facsimile.

As illustrated in FIG. 5, the image forming apparatus 200 is equipped with a paper feeding element 210, a transporting element 220, an image forming element 230, a transferring element 240, and a fixing element 250.

As illustrated in FIG. 5, the paper feeding element 210 is equipped with a paper feeding cassette 211 in which sheets to be fed is stored, and a feeding roller 212 configured to feed sheets stored in the paper feeding cassette 211 one by one.

The transporting element 220 is equipped with a roller 221 configured to transport the sheet fed by the feeding roller 212 to the side of the transferring element 240, a pair of timing rollers 222 configured to send the sheet transported by the roller 221 to the transferring element 240 with the predetermined timing, and a paper ejecting roller 223 configured to eject the sheet on which the toner has been fixed by the fixing element 250 to a paper ejection tray 224.

The image forming element 230 is equipped with an image forming unit Y, which is configured to form an image using a developer containing a yellow toner (toner Y), an image forming unit C, which is configured to form an image using a developer containing a cyan toner (toner C), an image forming unit M, which is configured to form an image using a developer containing a magenta toner (toner M), an image forming unit K, which is configured to form an image using a developer containing a black toner (toner K), and an exposure 233, where the image forming unit Y, the image forming unit C, the image forming unit M, and the image forming unit K are aligned from left to right in FIG. 5 with a certain interval. Note that, the toners (Y, C, M, K) are each the toner produced by the aforementioned method for producing particles.

In FIG. 5, the four image forming units have substantially the same mechanical structures, provided that a developer for use is different. Each image forming unit contains: a photoconductor drum (231Y, 231C, 231M, 231K), which is clockwise (FIG. 5) rotatably provided and is configured to bear a latent electrostatic image and a toner image; a charger (232Y, 232C, 232M, 232K) configured to uniformly charge a surface of the photoconductor drum (231Y, 231C, 231M, 231K); a toner cartridge (237Y, 237C, 237M, 237K) configured to supply a toner of respective color (Y, C, M, K); a developing device (234Y, 234C, 234M, 234K) configured to develop a latent electrostatic image formed on the photoconductor drum (231Y, 231C, 231M, 231K) by an exposure device 233 with the toner supplied from the toner cartridge (237Y, 237C, 237M, 237K) to form a toner image; a diselectrification device (235Y, 235C, 235M, 235K) configured to diselectrify the surface of the photoconductor drum (231Y, 231C, 231M, 231K) after the toner image is primary transferred to a transfer medium; and a cleaner (236Y, 236C, 236M, 236K) configured to remove the residual toner remained on the surface of the photoconductor drum (231Y, 231C, 231M, 231K) after diselectrified by the diselectrification device (235Y, 235C, 235M, 235K).

The exposure device 233 is a device, in which laser light L emitted from a light source 233a based on the image information is reflected with a polygon mirror (233bY, 233bC, 233bM, 233bK), which is rotatably driven by a motor, to radiate the photoconductor drum (231Y, 231C, 231M, 231K). A latent electrostatic image based on the image information is formed on the photoconductor drum 231 by means of the exposure device 233.

The transferring element 240 contains: a driving roller 241 and a driven roller 242; an intermediate transfer belt 243, which is supported by these rollers, and is serving as a transfer member capable of rotating anticlockwise in FIG. 5 along the rotation of the driving roller 241; a primary transfer roller (244Y, 244C, 244M, 244K) provided to face the photoconductor drum 231 via the intermediate transfer belt 243; and a secondary transfer roller 246 provided to face a secondary counter roller 245 via the intermediate transfer belt 243 at the transfer position of the toner image to a sheet.

In the transferring element 240, primary transfer bias is applied to the primary transfer roller 244 to transfer (primary transfer) each toner image formed on the surface of the photoconductor drum 231 onto the intermediate transfer belt 243. Moreover, secondary transfer bias is applied to the secondary transfer roller 246 to transfer (secondary transfer) the toner image on the intermediate transfer belt 243 to a transported sheet transported, which is nipped between the secondary transfer roller 246 the secondary counter roller 245.

The fixing element 250 contains: a heat roller 251 which contains a heater therein, and is configured to heat a sheet to temperature higher than the minimum fixing temperature of the toner; and a pressure roller 252, which is rotatably pressed against the heat roller 251 to form a contact surface (nip). In the present specification, the minimum fixing temperature is the lower limit of the temperature at which the toner can be fixed.

The image forming apparatus of the present invention uses a toner produced by the method of present invention, which has a sharp particle size distribution and excellent toner properties (e.g., charging property, environmental property, and storage stability), and therefore the image forming apparatus can form a high quality image.

### Examples

The present invention will be more specifically explained through Examples and Comparative Examples hereinafter, but Examples shall not be construed as limiting the scope of the present invention. Note that, in the descriptions in Examples, "part(s)" denotes "part(s) by mass" and "%" denotes "% by mass" unless otherwise stated.

### Synthesis of Polyester Resin 1 (Pressure Plastic Material)-

A reaction vessel equipped with a cooling tube, a stirrer, and a nitrogen inlet tube was charged with 229 parts of a bisphenol A ethylene oxide (2 mol) adduct, 529 parts of a bisphenol A propylene oxide (3 mol) adduct, 208 parts, of terephthalic acid 46 parts of adipic acid, and 2 parts of dibutyl tin oxide, and the mixture was allowed to react for 8 hours at 230°C under the atmospheric pressure. The resultant was further allowed to react for 5 hours under the reduced pressure of 10 mmHg to 15 mmHg. Thereafter, 44 parts of trimellitic anhydride was added to the reaction vessel, and the resulting mixture was allowed to react for 2 hours at 180°C under the atmospheric pressure to thereby yield Polyester Resin 1. Polyester Resin 1 had the number average molecular weight of 2,500, weight average molecular weight of 6,700, glass transition temperature Tg of 43°C, and acid value of 25. Moreover, the gradient in the graph depicting the relation between the pressure and the glass transition temperature was -10 °C/MPa.

Note that, as for the measurements of the glass transition temperature and the gradient, a high pressure calorimeter C-80 (manufactured by SETARAM Instrumentation) was used. A sample was set in a high pressure measuring cell, and the cell was purged with carbon dioxide, followed by applying pressure to give the predetermined pressure. The heating rate was set to 0.5 °C/min., and the glass transition temperature was measured by heating the sample up to 200°C.

### -Synthesis of Polyester Resin 2 (Pressure Plastic Resin)-

A 5 L- four necked flask equipped with a nitrogen inlet tube, a condenser, a stirrer, and a thermocouple was charged with 25 mol of 1,4-butanediol, 23.75 mol of fumaric acid, 1.65 mol of trimellitic anhydride, and 5.3 g of hydroquinone, and the resulting mixture was allowed to react for 5 hours at 160°C, followed by heated to 200°C and reacted for 1 hour. The resultant was further allowed to react for 1 hour at 8.3 kPa, to thereby obtain Polyester Resin 2. Polyester Resin 2 had the melting point of 119°C, number average molecular weight Mn of 710, weight average molecular weight Mw of 2,100, acid value of 24, and hydroxyl value of 28. The gradient of the change in the glass transition temperature of Polyester 2 relative to the pressure was measured in the aforementioned method, and was -5 °C/MPa.

### -Synthesis of Polyester Resin 3 (Pressure Plastic Resin)-

A reaction vessel equipped with a cooling tube, a stirrer, and a nitrogen inlet tube was charged with 343 parts of a bisphenol A ethylene oxide (2 mol) adduct, 166 parts of isophthalic acid, and 2 parts of dibutyl tin oxide, and the mixture was allowed to react for 8 hours at 230°C under the atmospheric pressure. The resultant was further allowed to react for 5 hours under the reduced pressure of 10 mmHg to 15 mmHg, followed by cooling the resultant to 110°C. To this, 17 parts of isophorone diisocyanate in toluene was added, and the mixture was allowed to react for 5 hours at 110°C, followed by removing the solvent, to thereby obtain Urethane-Modified Polyester Resin 3-1. Urethane-Modified Polyester Resin 3-1 had the weight average molecular weight of 72,000, and isocyanate content of 0.7%.

Meanwhile, in the same manner to the above, 570 parts of a bisphenol ethylene oxide (2 mol) adduct, and 217 parts of terephthalic acid were allowed to react for 6 hours at 230°C under the atmospheric pressure, to thereby obtain Polyester Resin 3-2, which had not been modified. Polyester Resin 3-2 had the number average molecular weight of 2,400, hydroxy value of 51, and acid value of 5. In 2,000 parts of ethyl acetate, 200 parts of Urethane-Modified Polyester Resin 3-1, and 800 parts of Polyester Resin 3-2 were dissolved and/or mixed, to thereby obtain a resin solution. Part of the resin solution was dried under the reduced pressure to isolate a resin component, to thereby obtain Polyester Resin 3. The gradient of the change in the glass transition temperature of Polyester 3 relative to the pressure was measured in the aforementioned method, and was -3 °C/MPa.

### (Example 1)

In Example 1, a toner was produced using the apparatus for producing particles 1 illustrated in FIG. 4. In Example 1, a carbonic acid gas (carbon dioxide) bomb was used as the bomb 11. Moreover, a nitrogen bomb was used as the bomb 21.

A high pressure cell 14 of the apparatus for producing particles 1 of FIG, 4 was charged with Polyester Resin 1, and carbon dioxide as the first compressive fluid was introduced at 160°C, 2 MPa, followed by stirring for 1 hour. The thus obtained melt had the viscosity of 450 mPa·s. As for the measurement of the viscosity of the melt, a viscometer (VISCOlab PVT, manufactured by Cambridge Viscosity, Inc.) was used. The measurement was performed by in the following manner. A sample was set in a measuring unit, and temperature and pressure were controlled. The temperature and pressure at which the viscosity became constant were determined, and such viscosity was determined as the viscosity at such temperature and such pressure. Next, the valve 23 was open, and the pump 22 and heater 26 were operated, so that supercritical nitrogen as the second compressive fluid was jetted from the nozzle 32 while maintaining the pressure and temperature at 2 MPa, 160°C. In this state, the valve 13b was open, and the pump 12b was operated so that the melt was jetted with supplying the second compressive fluid to the melt. During this process, the temperature and pressure inside the high pressure cell 14 were constantly maintained at 180°C and 2 MPa, respectively, by adjusting the pump 12a and the back pressure valve 14a. The jetted melt was formed into particles, followed by solidified, to thereby obtain Resin Particles 1. Resin Particles 1 obtained just after the initial jetting had the volume average particle diameter (Dv) of 65.3 µm, the number average particle diameter (Dn) of 8.9 µm, and the ratio Dv/Dn of 7.33. Resin Particles 1 obtained after one hour from the initial jetting had the volume average particle diameter (Dv) of 68.5 µm, the number average particle diameter (Dn) of 8.8 µm, and the ratio Dv/Dn of 7.78. Moreover, the yield of particles, which was the mass of Resin Particles 1 as collected relative to the mass of the raw materials as loaded, was 80%. Note that, the volume average particle diameter, and the ratio (volume average particle diameter/number average particle diameter) of the volume average particle diameter to the number average particle diameter were measured by means of a particle size analyzer, Coulter Counter TAII, manufactured by Beckman Coulter, Inc.

### (Examples 2 to 4)

Resin Particles 2 to 4 were each produced in the same manner as in Example 1, provided that the processing temperature, processing pressure, and the nozzle diameter were changed as depicted in Table 1. Resin Particles 2 to 4 were each subjected to the measurements of the viscosity of the melt, volume average particle diameter (Dv), number average particle diameter (Dn), ratio Dv/Dn, and yield in the same manner as in Example 1. The results are presented in Tables 1 and 2.

### (Example 5)

Resin Particles 5 were obtained in the same manner as in Example 1, provided that Polyester Resin 1 was replaced with Polyester Resin 2, and the processing temperature, processing pressure and nozzle diameter were changed to the values as depicted in Table 1. Resin Particles 5 were subjected to the measurements of the viscosity of the melt, volume average particle diameter (Dv), number average particle diameter (Dn), ratio Dv/Dn, and yield in the same manner as in Example 1. The results are presented in Tables 1 and 2.

### (Example 6)

In Example 6, a toner was produced by means of an apparatus for producing particle 2 of FIG. 6. In Example 6, a carbonic acid gas (carbon dioxide) bomb was used as a bomb 11. Moreover, a nitrogen bomb was used as the bomb 21.

### <Raw Materials >

| | |
|---|---|
| Polyester Resin 1 | 95 parts |
| • Colorant [copper phthalocyanine blue (C.I. Pigment Blue 15:3 manufactured by Dainichiseika Color & Chemicals Mfg. Co., Ltd.)] | 5 parts |
| • Paraffin wax (melting point: 79°C) | 5 parts |

The raw materials of the toner listed above were mixed by a mixer, and the mixture was melt-kneaded by a two-roll mill. The kneaded product was rolled and cooled. The resulting kneaded product was set in a cell 24 of the apparatus for producing particles 2 depicted in FIG. 6, followed by heating to 160°C to plasticize the kneaded product. The pump 12a was operated and the valve 13a was open so that the carbon dioxide was supplied as a first compressive fluid at 150°C, and 40 MPa. Moreover, the pump 12b was operated and the valve 13b was open so that the plasticized kneaded mixture and the first compressive fluid were continuously brought into contact with each other and were mixed in the blending device 17. Next, the valve 23 was open, and the pump 22 and the heater 26 were used so that supercritical nitrogen was jetted from the nozzle 32 as the second compressive fluid with maintaining the pressure and the temperature at 40 MPa, 150°C. In this state, the valve 13c was open to continuously jet the melt, which had been obtained by bringing the kneaded mixture and the first compressive fluid into contact with each other, from the nozzle 32, while supplying the second compressive fluid to the melt. The temperature and pressure of the melt passing through the blending device 17 were constantly maintained at 150°C, and 40 MPa, respectively, by adjusting the pump 12a, and the pump 12b. The jetted melt formed particles, and the particles were solidified to thereby obtain Toner 6. Toner 6 was subjected to the measurements of the viscosity of the melt, volume average particle diameter (Dv), number average particle diameter (Dn), ratio Dv/Dn, and yield in the same manner as in Example 1. The results are presented in Tables 1 and 2.

### (Example 7)

Toner 7 was obtained in the same manner as in Example 6, provided that the processing temperature and processing pressure were changed to the values as depicted in Table 1. Toner 7 was subjected to the measurements of the viscosity of the melt, volume average particle diameter (Dv), number average particle diameter (Dn), ratio Dv/Dn, and yield in the same manner as in Example 1. The results are presented in Tables 1 and 2.

### (Example 8)

Toner 8 was obtained in the same manner as in Example 7, provided that the nitrogen bomb was replaced with an air bomb as the bomb 21. Toner 8 was subjected to the measurements of the viscosity of the melt, volume average particle diameter (Dv), number average particle diameter (Dn), ratio Dv/Dn, and yield in the same manner as in Example 1. The results are presented in Tables 1 and 2.

### (Comparative Example 1)

### <Toner Raw Materials >

| | |
|---|---|
| Polyester Resin 3 | 50 g |
| Colorant [copper phthalocyanine blue (C.I. Pigment Blue 15:3 manufactured by Dainichiseika Color & Chemicals Mfg. Co., Ltd.)] | 2.5 parts |
| Trimethylol propane tribehenate (melting point: 58°C) | 12.5 parts |

A 500 mL resin dissolver, which was equipped with a stirrer, and a temperature sensor, and was capable of setting its internal pressure up to 30 MPa, and setting its internal temperature up to 290°C, was heated to 150°C. Then the resin dissolver was charged with the toner raw materials to melt the raw materials. Next, the melted resin and liquid carbon dioxide (10 g) were introduced into a static mixer, which was composed of 30 elements, and had an internal diameter of 5 mm, using a booster pump. During this procedure, the internal pressure of the static mixer was set to 8 MPa. The operation for jetting the mixture of the carbon dioxide and the resin from a nozzle, which was provided at an edge of the static mixer, and had an opening diameter of 50 µm, was performed, but particles could not be formed because the plasticization of the toner melt was insufficient.

### (Comparative Example 2)

The processes identical to those of Example 6 were carried out, provided that the processing pressure and the nozzle diameter were changed to the values as depicted in Table 1, but particles could not be formed because the plasticization of the toner melt was insufficient.

### (Comparative Example 3)

Comparative Toner 3 was obtained in the same manner as in Example 7, provided that the nitrogen bomb was replaced with a carbon dioxide bomb as the bomb 21. Comparative Toner 3 was subjected to the measurements of the viscosity of the melt, volume average particle diameter (Dv), number average particle diameter (Dn), ratio Dv/Dn, and yield in the same manner as in Example 1. The results are presented in Tables 1 and 2.

**Table 1-1**

| | Particle No. | Gradient of pressure plastic material (°C/MPa) | Processing temperature (°C) | Processing pressure (MPa) |
|---|---|---|---|---|
| Ex. 1 | Resin Particles 1 | -10 | 160 | 2 |
| Ex. 2 | Resin Particles 2 | -10 | 150 | 4 |
| Ex. 3 | Resin Particles 3 | -10 | 100 | 10 |
| Ex. 4 | Resin Particles 4 | -10 | 120 | 7 |
| Ex. 5 | Resin Particles 5 | -5 | 120 | 2 |
| Ex. 6 | Toner 6 | -10 | 150 | 40 |
| Ex. 7 | Toner 7 | -10 | 130 | 65 |
| Ex. 8 | Toner 8 | -10 | 130 | 65 |
| Comp. Ex. 1 | Comparative Toner 1 | -3 | 150 | 8 |
| Comp. Ex. 2 | Comparative Toner 2 | -10 | 150 | 0.1 |
| Comp. Ex. 3 | Comparative Toner 3 | -10 | 130 | 65 |

**Table 1-2**

| | Viscosity of melt (mPa·s) | Nozzle diameter (µm) | Dv (just after initial jetting) (µm) | Dn (just after initial jetting) (µm) | Dv/Dn |
|---|---|---|---|---|---|
| Ex. 1 | 450 | 400 | 65.3 | 8.9 | 7.33 |
| Ex. 2 | 300 | 300 | 34.4 | 8.0 | 4.30 |
| Ex. 3 | 160 | 200 | 22.9 | 6.8 | 3.37 |
| Ex. 4 | 80 | 200 | 16.5 | 6.2 | 2.66 |
| Ex. 5 | 68 | 200 | 14.0 | 6.1 | 2.30 |
| Ex. 6 | 18 | 100 | 7.0 | 5.5 | 1.27 |
| Ex. 7 | 3 | 100 | 5.1 | 4.5 | 1.13 |
| Ex. 8 | 3 | 100 | 5.1 | 4.5 | 1.13 |
| Comp. Ex. 1 | 700 | 50 | No particle was formed | No particle was formed | - |
| Comp. Ex. 2 | 5,800 | 400 | No particle was formed | No particle was formed | - |
| Comp. Ex. 3 | 3 | 100 | 5.0 | 4.4 | 1.14 |

**Table 2**

| | Dv (one hour after initial jetting) (µm) | Dn (one hour after initial jetting) (µm) | Dv/Dn | Yield of particles |
|---|---|---|---|---|
| Ex. 1 | 68.5 | 8.8 | 7.78 | 80 |
| Ex. 2 | 36.1 | 7.8 | 4.63 | 83 |
| Ex. 3 | 24.0 | 6.9 | 3.47 | 85 |
| Ex. 4 | 17.3 | 6.3 | 2.75 | 88 |
| Ex. 5 | 14.7 | 6.2 | 2.37 | 87 |
| Ex. 6 | 7.4 | 5.7 | 1.29 | 90 |
| Ex. 7 | 5.4 | 4.7 | 1.15 | 92 |
| Ex. 8 | 5.5 | 4.7 | 1.17 | 90 |
| Comp. Ex. 1 | No particle was formed | No particle was formed | - | - |
| Comp. Ex. 2 | No particle was formed | No particle was formed | - | - |
| Comp. Ex. 3 | 5.8 | 4.8 | 1.21 | 50 |

To each of Toners 6 to 8 and Comparative Toner 3 (100 parts), 0.7 parts by mass of hydrophobic silica, and 0.3 parts by mass of hydrophobic titanium oxide were added, and the mixture was mixed for 5 minutes by means of HENSCHEL MIXER at a rim speed of 8 m/s. The resultant was passed through a mesh having an opening size of 100 µm, to remove coarse particles. Next, 5% by mass of the resulting toner, which had been subjected the external additive treatment in the aforementioned manner, and 95% by mass of a copper-zinc ferrite carrier, which had been coated with a silicone resin, and had the average particle diameter of 40 µm, were homogeneously mixed and charged by means of a turbula mixer in which a vessel was rolled for stirring, to thereby prepare a two-component developer, Developers 6 to 8 and Comparative Developer 3 respectively. Note that, the toners used for Developers 6 to 8 and Comparative Developer 3 are respectively Toners 6 to 8 and Comparative Toner 3. Note that, two-component developers of Comparative Toners 1 to 2 were not prepared.

Moreover, to 100 parts of each of Toners 6 to 8 and Comparative Toner 3, 0.7 parts by mass of hydrophobic silica, and 0.3 parts of hydrophobic titanium oxide were added, and the mixture was mixed for 5 minutes by means of HENSCHEL MIXER at a rim speed of 8 m/s, to thereby prepare a one-component developer, Developers 16 to 18 and Comparative Developer 13, respectively. Note that, the toners used for Developers 16 to 18 and Comparative Developer 13 are respectively Toners 6 to 8 and Comparative Toner 3. Note that, one-component developers of Comparative Toners 1 to 2 were not prepared.

Each of the obtained developer was set in an image forming apparatus (IPSIO Color 8100 manufactured by Ricoh Company Limited for the evaluation of a two-component developer, and imagio Neo C200 manufactured by Ricoh Company Limited for the evaluation for a one-component developer), and an image was output to evaluate in the following manner. The results are presented in Table 3.

### <Image Density>

A solid image was output on plain paper, which was a transfer sheet (Type 6200, manufactured by Ricoh Company Limited), with the low toner deposition amount of 0.3 mg/cm² ± 0.1 mg/cm². Then, the image density of the image was measured by a densitometer X-Rite (manufactured by X-Rite). The results were evaluated based on the following criteria.

### [Evaluation Criteria]

A: Image density was 1.4 or more.
B: Image density was 1.35 or more but less than 1.4.
C: Image density was 1.3 or more but less than 1.35.
D: Image density was less than 1.3.

### <Toner Scattering>

After 100,000 sheets of a chart having an image area of 5% were continuously output using each of the developer in an image forming apparatus (IPSiO Color 8100, manufactured by Ricoh Company Limited), which had been converted to oilless fixing system and tuned for evaluation, at a temperature of 40°C and 90%RH, the level of toner contamination in the image forming apparatus was visually observed and evaluated based on the following evaluation criteria.

### [Evaluation Criteria]

A: No toner contamination was observed at all in the image forming apparatus, and an excellent state was maintained.
B: Slight toner contamination was observed in the image forming apparatus, and a satisfactory state was maintained.
C: Toner contamination was observed in the image forming apparatus.
D: Severe toner contamination was observed in the image forming apparatus, and it was out of an acceptable level.

### <Transfer Property>

After a chart having an image area of 20% was transferred from the photoconductor to paper, a residual toner on the photoconductor was transferred onto white paper using SCOTCH TAPE (manufactured by Sumitomo 3M Ltd.) just before cleaning. The density of the white paper on which the residual toner had been transferred was then measured using Macbeth Reflection Densitometer RD514. The results were evaluated based on the following criteria.

### [Evaluation Criteria]

A: The difference with blank white paper was less than 0.005.
B: The difference with blank white paper was 0.005 to 0.010.
C: The difference with blank white paper was 0.011 to 0.02.
D: The difference with blank white paper was more than 0.02.

### <Charge Stability>

A letter image pattern having an image area of 12% was continuously output on 100,000 sheets using each of the developers. The variation in the charge amount during the output test was evaluated. A small amount of the developer was collected from the sleeve, and the variation of the charge amount was determined by a blow-off method. The results are evaluated based on the following criteria.

### [Evaluation Criteria]

B: The variation in the charge amount was less than 5 µc/g.
C: The variation in the charge amount was 5 µc/g to 10 µc/g.
D: The variation in the charge amount was more than 10 µc/g.

### <Filming>

After 1,000 sheets of respective band charts having image areas of 100%, 75% and 50% were output, the filming over a developing roller and photoconductor were visually observed and evaluated based on the following evaluation criteria.

### [Evaluation Criteria]

A: No filming occurred.
B: Filming slightly occurred.
C: Streaky filming occurred.
D: Filming occurred all over the developing roller and photoconductor.

After outputting 1,000 sheets of a chart having an image area of 95%, cleaning was performed on a photoconductor. A residual toner on the cleaned photoconductor was transferred onto white paper using SCOTCH TAPE (manufactured by Sumitomo 3M Limited). The density of the white paper on which the residual toner had been transferred was measured by means of Macbeth reflection densitometer RD514. The results were evaluated based on the following criteria.

### [Evaluation Criteria]

A: The difference with blank white paper was less than 0.005.
B: The difference with blank white paper was 0.005 to 0.010.
C: The difference with blank white paper was 0.011 to 0.02.
D: The difference with blank white paper was more than 0.02.

### <Total Evaluation>

The evaluation results of the evaluation items were determined with the following points:
A: 1 point
B: 0 points
C: -1 points
D: -2 points

The total evaluation was performed based on the total points.

### [Evaluation Criteria]

A: The total points were 4 points to 5 points.
B: The total points were 0 points to 3 points.
C: The total points were -3 points to -1 points.
D: The total points were lower than -4.

**Table 3**

| | Image density | Toner scattering | Transfer property | Charge stability | Filming | Cleaning property | Total evaluation |
|---|---|---|---|---|---|---|---|
| Developer 6 | B | B | B | B | A | B | B |
| Developer 7 | A | A | A | B | A | B | A |
| Developer 8 | A | A | A | B | A | B | A |
| Developer 16 | B | B | B | B | B | B | B |
| Developer 17 | A | A | A | B | A | B | A |
| Developer 18 | A | A | A | B | A | B | A |

The embodiments of the present invention are, for example, as follows:
<1> A method for producing particles, containing:
   bringing a first compressive fluid and raw materials containing a pressure plastic material into contact with each other to melt the pressure plastic material; and
   jetting a melt obtained by melting the pressure plastic material, with supplying a second compressive fluid containing nitrogen to the melt, to thereby form particles.
<2> The method according to <1>, wherein the bringing contains bringing the first compressive fluid and the pressure plastic material, which has been plasticized in advance by heating, into contact with each other.
<3> The method according to any of <1> or <2>, wherein the melt has a viscosity of 500 mPa·s or lower.
<4> The method according to <3>, wherein the melt has a viscosity of 20 mPa·s or lower.
<5> The method according to any one of <1> to <4>, wherein a gradient of a change in glass transition temperature of the pressure plastic material relative to pressure applied to the pressure plastic material is -5 °C/MPa or less.
<6> The method according to <5>, wherein the gradient of a change in glass transition temperature of the pressure plastic material relative to pressure applied to the pressure plastic material is -10 °C/MPa or less.
<7> The method according to any one of <1> to <6>, wherein the bringing contains continuously bringing the first compressive fluid and the pressure plastic material into contact with each other without using a static mixer.
<8> The method according to any one of <1> to <7>, wherein the bringing contains continuously bringing the first compressive fluid and the pressure plastic material into contact with each other, and the jetting contains continuously jetting the melt to continuously form particles.
<9> The method according to any one of <1> to <8>, wherein the pressure plastic material is a polyester resin.
<10> The method according to any one of <1> to <9>, wherein the first compressive fluid contains carbon dioxide.
<11> The method according to any one of <1> to <10>, wherein the second compressive fluid is supplied at the pressure of 1 MPa or greater.
<12> The method according to any one of <1> to <11>, wherein the particles to be produced are a toner.
<13> A toner, containing:
   a pressure plastic material; and
   substantially no organic solvent,
   wherein the toner is produced by the method according to <12>.
<14> A developer containing:
   the toner according to <13>.
<15> An image forming apparatus containing:
   a latent electrostatic image bearing member;
   a latent electrostatic image forming unit configured to form a latent electrostatic image on the latent electrostatic image bearing member;
   a developing unit configured to develop the formed latent electrostatic image with the toner according to <13>, to thereby form a visible image;
   a transferring unit configured to transfer the developed visible image to a recording medium; and
   a fixing unit configured to fix the transferred visible image on the recording medium.

### Reference Signs List

1: apparatus for producing particles
2: apparatus for producing particles
11, 21: bomb
12a, 12b, 22: pump
13a, 13b, 23: valve
14: high pressure cell
16, 26: heater
24: cell
17, 31: blending device
32: nozzle
200: image forming apparatus
210: paper feeding element
211: paper feeding cassette
212: feeding roller
220: transporting element
221: roller
222: timing roller
223: paper ejecting roller
224: ejection tray
230: image forming element
231: photoconductor drum (one example of the latent electrostatic image bearing member)
232: charger
233: exposure device (one example of the latent electrostatic image forming unit)
234: developing device (one example of the developing unit)
235: diselectrification device
236: cleaner
237: toner cartridge
240: transferring element (one example of the transferring unit)
241: driving roller
242: driven roller
243: intermediate transfer belt
244: primary transfer roller
245: secondary counter roller
246: secondary transfer roller
250: fixing element (one example of the fixing unit)
251: heat roller
252: pressure roller
T: toner

## Claims

1. A method for producing polyester resin particles, comprising:
bringing a first compressive fluid and raw materials containing a pressure plastic material which is a polyester resin into contact with each other to melt the polyester resin;
mixing the melt of the polyester resin obtained by contacting with the first compressive fluid and a second compressive fluid containing nitrogen; and
jetting the melt of the polyester resin obtained by mixing with the second compressive fluid, to thereby form particles,
wherein the pressure plastic material has the characteristic that the glass transition temperature (Tg) reduces as pressure is applied,
wherein the first compressive fluid and the second compressive fluid are one of the following:
i) a supercritical fluid,
ii) a liquefied gas obtained by compressing a substance existing as a gas at a normal temperature of 25°C and a normal pressure of 1 atm, or
iii) a high-pressure gas whose pressure is 1/2 Pc or higher, wherein Pc is the pressure of the critical point,
wherein the second compressive fluid is a substance having the maximum inversion temperature of 800K or lower,
wherein the melt has a viscosity of 500 mPa·s or lower,
wherein the viscosity of 500 mPa·s or lower is measured under the condition at the pressure of 30 MPa or lower.

2. The method according to claim 1, wherein the bringing contains bringing the first compressive fluid and polyester resin, which has been plasticized in advance by heating, into contact with each other.

3. The method according to claim 1, wherein the melt has a viscosity of 20 mPa·s or lower.

4. The method according to any one of claims 1 to 3, wherein a gradient of a change in glass transition temperature of the polyester resin relative to pressure applied to the polyester resin is -5 °C/MPa or less.

5. The method according to claim 4, wherein the gradient of a change in glass transition temperature of the polyester resin relative to pressure applied to the polyester resin is -10 °C/MPa or less.

6. The method according to any one of claims 1 to 5, wherein the bringing contains continuously bringing the first compressive fluid and the polyester resin into contact with each other without using a static mixer.

7. The method according to any one of claims 1 to 6, wherein the bringing contains continuously bringing the first compressive fluid and the polyester resin into contact with each other, and the jetting contains continuously jetting the melt to continuously form particles.

8. The method according to any one of claims 1 to 7, wherein the first compressive fluid contains carbon dioxide.

9. The method according to any one of claims 1 to 8, wherein the second compressive fluid is supplied at the pressure of 1 MPa or greater.

10. The method according to any one of claims 1 to 9, wherein the polyester resin particles to be produced are a toner.

## Patentansprüche

1. Verfahren zum Herstellen von Polyesterharzpartikeln, umfassend:
In-Kontakt-Bringen eines ersten Druckfluids mit Rohmaterialien, die ein Druckkunststoffmaterial enthalten, das ein Polyesterharz ist, um das Polyesterharz zu schmelzen;
Mischen der Schmelze des Polyesterharzes, die durch das In-Kontakt-Bringen mit dem ersten Druckfluid erhalten wurde, mit einem zweiten Druckfluid, das Stickstoff enthält; und
Abspritzen der Schmelze des Polyesterharzes, die durch Mischen mit dem zweiten Druckfluid erhalten wurde, um dadurch Partikel zu bilden,
wobei das Druckkunststoffmaterial die Eigenschaft hat, dass die Glasübergangstemperatur (Tg) sich verringert, wenn Druck angewendet wird,
wobei das erste Druckfluid und das zweite Druckfluid eines des Folgenden sind:
i) ein überkritisches Fluid,
ii) ein verflüssigtes Gas, das durch Komprimieren einer Substanz, die als ein Gas vorliegt, bei einer Normaltemperatur von 25 °C und einem Normaldruck von 1 atm erhalten wurde, oder
iii) ein Hochdruckgas, dessen Druck 1/2 Pc oder höher ist, wobei Pc der Druck des kritischen Punkts ist,
wobei das zweite Druckfluid eine Substanz mit der maximalen Inversionstemperatur von 800 K oder niedriger ist,
wobei die Schmelze eine Viskosität von 500 mPa·s oder niedriger hat,
wobei die Viskosität von 500 mPa·s oder niedriger unter der Bedingung eines Drucks von 30 MPa oder niedriger gemessen wird.

2. Verfahren nach Anspruch 1, wobei das In-Kontakt-Bringen ein In-Kontakt-Bringen des ersten Druckfluids mit dem Polyesterharz, das zuvor durch Erhitzen plastiziert wurde, umfasst.

3. Verfahren nach Anspruch 1, wobei die Schmelze eine Viskosität von 20 mPa·s oder niedriger hat.

4. Verfahren nach einem der Ansprüche 1 bis 3, wobei ein Gefälle einer Änderung der Glasübergangstemperatur des Polyesterharzes in Bezug auf den Druck, der auf das Polyesterharz angewendet wird, -5°C/MPa oder weniger ist.

5. Verfahren nach Anspruch 4, wobei das Gefälle einer Änderung der Glasübergangstemperatur des Polyesterharzes in Bezug auf den Druck, der auf das Polyesterharz angewendet wird, -10°C/MPa oder weniger ist.

6. Verfahren nach einem der Ansprüche 1 bis 5, wobei das In-Kontakt-Bringen ein kontinuierliches In-Kontakt-Bringen des ersten Druckfluids mit dem Polyesterharz umfasst, ohne einen statischen Mischer zu verwenden.

7. Verfahren nach einem der Ansprüche 1 bis 6, wobei das In-Kontakt-Bringen ein kontinuierliches In-Kontakt-Bringen des ersten Druckfluids mit dem Polyesterharz umfasst und das Abspritzen ein kontinuierliches Abspritzen der Schmelze umfasst, um kontinuierlich Partikel zu bilden.

8. Verfahren nach einem der Ansprüche 1 bis 7, wobei das erste Druckfluid Kohlendioxid enthält.

9. Verfahren nach einem der Ansprüche 1 bis 8, wobei das zweite Druckfluid bei dem Druck von 1 MPa oder größer zugeführt wird.

10. Verfahren nach einem der Ansprüche 1 bis 9, wobei die herzustellenden Polyesterharzpartikel ein Toner sind.

## Revendications

1. Procédé de production de particules de résine de polyester, comprenant :
la mise en contact de l'un avec les autres d'un premier fluide de compression avec des matières premières contenant une matière plastique sous pression qui est une résine de polyester pour fondre la résine de polyester ;
le mélange de la masse fondue de résine de polyester obtenue par la mise en contact avec le premier fluide de compression et avec un deuxième fluide de compression comprenant de l'azote ; et
la projection de la masse fondue de résine de polyester obtenue par le mélange avec le deuxième fluide de compression, pour ainsi former des particules,
la matière plastique sous pression ayant la caractéristique selon laquelle la température de transition vitreuse (Tg) est réduite lorsque la pression est appliquée,
le premier fluide de compression et le deuxième fluide de compression étant un des éléments suivants :
i) un fluide supercritique,
ii) un gaz liquéfié obtenu par compression d'une substance existant en tant que gaz à une température normale de 25 °C et une pression normale de 1 atm, ou
iii) un gaz à haute pression dont la pression est de 1/2 Pc ou plus, Pc représentant la pression du point critique,
le deuxième fluide de compression étant une substance ayant une température d'inversion maximale de 800K ou moins,
la masse fondue présentant une viscosité de 500 mPa·s ou moins,
la viscosité de 500 mPa·s ou moins étant mesurée dans des conditions de pression de 30 Mpa ou moins.

2. Procédé selon la revendication 1, dans lequel la mise en contact comprend la mise en contact de l'un avec l'autre du premier fluide de compression avec la résine de polyester, qui a été plastifiée à l'avance par la chauffe.

3. Procédé selon la revendication 1, dans lequel la masse fondue présente une viscosité de 20 mPa·s ou moins.

4. Procédé selon l'une quelconque des revendications 1 à 3, dans lequel un gradient de variation à la température de transition vitreuse de la résine de polyester par rapport à la pression appliquée à la résine de polyester est de -5 °C/Mpa ou moins.

5. Procédé selon la revendication 4, dans lequel le gradient de variation à la température de transition vitreuse de la résine de polyester par rapport à la pression appliquée à la résine de polyester est de -10 °C/Mpa ou moins.

6. Procédé selon l'une quelconque des revendications 1 à 5, dans lequel la mise en contact comprend la mise en contact continue de l'un avec l'autre du premier fluide de compression avec la résine de polyester sans utilisation d'un mélangeur statique.

7. Procédé selon l'une quelconque des revendications 1 à 6, la mise en contact comprend la mise en contact continue de l'un avec l'autre du premier fluide de compression avec la résine de polyester et la projection comprend la projection continue de la masse fondue pour former en continu des particules.

8. Procédé selon l'une quelconque des revendications 1 à 7, dans lequel le premier fluide de compression comprend du dioxyde de carbone.

9. Procédé selon l'une quelconque des revendications 1 à 8, dans lequel le deuxième fluide de compression est fourni à la pression de 1 Mpa ou plus.

10. Procédé selon l'une quelconque des revendications 1 à 9, dans lequel les particules de résine de polyester à produire sont une encre.
